# EUROPEAN PATENT SPECIFICATION

(11) **EP 4 287 048 B1**
(45) Date of publication and mention of the grant of the patent: **18.11.2026**
(21) Application number: 22774327.5
(22) Date of filing: 24.03.2022
(51) Int. Cl.: G06F 21/34, G06F 21/44, G06F 21/45

(54) **LOGIN AUTHENTICATION METHOD AND ELECTRONIC DEVICE**
ANMELDUNGSAUTHENTIFIZIERUNGSVERFAHREN UND ELEKTRONISCHE VORRICHTUNG
PROCÉDÉ D´AUTHENTIFICATION DE CONNEXION ET DISPOSITIF ÉLECTRONIQUE

(30) Priority: 25.03.2021 CN 202110321425
(43) Date of publication of application: 06.12.2023
(60) Divisional application: 26203333.5
(73) Proprietor: Huawei Technologies Co., Ltd., Shenzhen, Guangdong 518129 (CN)
(72) Inventor: MAO, Yufeng, Shenzhen, Guangdong 518129 (CN)
(74) Representative: Goddar, Heinz J.
(86) International application number: PCT/CN2022/082877
(87) International publication number: WO 2022/199673

(56) References cited:
- EP-A1- 2 611 097
- EP-A1- 2 611 097
- CN-A- 104 093 141
- CN-A- 110 719 590
- CN-A- 110 719 590
- CN-A- 110 830 479

## Description

This application claims priority to Chinese Patent Application No. 202110321425.2, filed with the China National Intellectual Property Administration on March 25, 2021 and entitled "LOGIN AUTHENTICATION METHOD AND ELECTRONIC DEVICE".

### TECHNICAL FIELD

This application relates to the field of terminals, and more specifically, to a login authentication method and an electronic device.

### BACKGROUND

In the mobile internet era, a user registers an account for each application (application, APP) in a plurality of fields such as socializing, media, communication, and finance, to perform verification on identity information of a login user of each application. A subscriber identity module (subscriber identity module, SIM) number is one of commonly used accounts at present.

Currently, a known solution is that an electronic device may use a default SIM to implement one-click login with a local phone number. However, this solution is applied to limited scenarios. The electronic device may use this solution only when a SIM is inserted into the electronic device and the SIM is set as a default mobile data SIM. However, in some cases, for example, the electronic device used by the user may be a non-SIM device, or for another example, the user does not want to use the default mobile data SIM to log in to an application, the user cannot use a SIM to implement one-click login, and still needs to log in to the application through cumbersome operations, resulting in poor user experience.

CN 110719590 A discloses a one-key login method and device based on a mobile phone number, equipment and a storage medium. The method comprises the following steps: in response to a one-key login request sent by a user, obtaining a target SIM card selected by the user; if the target SIM card is the current flow card, sending a mobile phone number corresponding to the target SIM card to the server through a flow channel for login verification; if the target SIM card is not the current flow card, setting the target SIM card as the current flow card, and sending a mobile phone number corresponding to the target SIM card to the server through a flow channel for login verification; and receiving login confirmation response information returned by the server after login verification succeeds. According to the technical scheme of the embodiment of the disclosure, the selection flexibility of the mobile phone card for login is improved.

EP 2 611 097 A1 discloses a method for authenticating a user from a first mobile device to an application server for a current session, characterized in that it comprises connecting to said application server with the phone number of a second mobile device.

### SUMMARY

Embodiments of this application provide a login authentication method and an electronic device, to implement one-click login authentication by using a specified SIM, to improve user experience.

According to a first aspect, this application provides a login authentication method. The method may be performed by a first device, or may be performed by a component configured in a first device, for example, a chip or a chip system. This is not limited in embodiments of this application. The following is merely an example, and the login authentication method provided in embodiments of this application is described by using the first device as an execution body.

For example, the method includes: The first device obtains, through a near field secure transmission connection, related information of a target SIM. The target SIM is a physical SIM configured in a second device. The first device performs login authentication of an application based on the related information of the target SIM.

Based on the foregoing solution, related information of a specified SIM is obtained, and one-click login authentication of the application is implemented based on the related information of the specified SIM. In this way, an electronic device without a physical SIM inserted can perform login authentication of the application by using a physical SIM in another near field device, and a "multiple SIM multiple standby" electronic device can perform login authentication of the application by using a physical SIM not set as default mobile data. This breaks a limitation of a technology of one-click login with a local phone number to some extent. Therefore, user experience is improved.

With reference to the first aspect, in some possible implementations, the method further includes: The first device generates a login authentication data packet based on the related information of the target SIM. The login authentication data packet is used for login authentication of the application. The first device sends the login authentication data packet to an operator authentication gateway by using a cellular mobile network of the target SIM.

The electronic device may generate the login authentication data packet based on the obtained related information of the target SIM, and send the login authentication data packet to the operator authentication gateway. From a perspective of the operator authentication gateway, login authentication is still performed based on the target SIM. Therefore, the operator authentication gateway does not perceive one-click login with the target SIM on another electronic device, and authentication complexity of the operator authentication gateway is not increased, that is, an existing authentication process is not affected.

Further, if the target SIM is the physical SIM in the second device, that the first device sends the login authentication data packet to an operator authentication gateway by using a cellular mobile network of the target SIM may specifically include: The first device sends the login authentication data packet to the second device, so that the second device sends the login authentication data packet to the operator authentication gateway by using the cellular mobile network of the target SIM.

If the target SIM is a physical SIM in the first device, the first device may directly send the login authentication data packet to the operator authentication gateway by using the cellular mobile network of the target SIM.

With reference to the first aspect, in some possible implementations, before the first device performs login authentication of the application based on the related information of the target SIM, the method further includes: The first device determines, in response to an operation of a user, the target SIM for login authentication.

The user may preset a SIM for login authentication, and the electronic device may determine the target SIM preset by the user for login authentication. Therefore, good user interaction is implemented, and user experience is improved.

With reference to the first aspect, in some possible implementations, the related information of the target SIM includes at least one of the following: an integrated circuit card identity (integrated circuit card identity, ICCID), a SIM mobile number, and user identity information of the target SIM.

With reference to the first aspect, in some possible implementations, the target SIM is the physical SIM configured in the second device, and the method further includes: The first device receives an authentication result data packet from the second device. The authentication result data packet is received by the second device from the operator authentication gateway by using the cellular mobile network of the target SIM.

The second device may receive the authentication result data packet from the operator authentication gateway by using the cellular mobile network of the target SIM, and send the authentication result data packet to the first device, so that the first device can obtain a result of login authentication of the application. In this way, one-click login with the specified SIM is implemented.

With reference to the first aspect, in some possible implementations, the target SIM is the physical SIM configured in the second device, and before the first device obtains the related information of the target SIM, the method further includes: The first device establishes a near field secure transmission connection to the second device. Secure communication can be performed between the devices that establish the near field secure transmission connection. That the first device obtains related information of a target SIM includes: The first device shares SIM information with the second device based on the near field secure transmission connection, to obtain the related information of the SIM.

It should be understood that near field secure transmission may specifically mean that secure communication may be performed between devices, for example, between the first device and the second device, in a near field condition. The near field secure transmission connection may be specifically a connection for implementing secure communication between the devices in the near field condition.

Based on the foregoing solution, the first device may obtain the related information of the target SIM from the second device through the near field secure transmission connection to the second device, to prepare for subsequent login authentication with the target SIM. In addition, the related information of the SIM is obtained through the near field secure transmission connection, so that information leakage can be avoided, and security is high.

With reference to the first aspect, in some possible implementations, the target SIM is the physical SIM configured in the first device but not set as the default mobile data, and the method further includes: The first device receives an authentication result data packet from the operator authentication gateway by using the cellular mobile network of the target SIM.

The first device may receive the authentication result data packet from the operator authentication gateway by using the cellular mobile network of the target SIM, so that the first device can obtain a result of login authentication of the application. In this way, one-click login with the specified SIM is implemented.

According to a second aspect, this application provides an electronic device. The electronic device includes at least one processor and at least one communication interface. The processor is coupled to the communication interface, and may be configured to execute a computer program so that the electronic device performs the following operations: obtaining related information of a target subscriber identity module, SIM, through a near field secure transmission connection, wherein the target SIM is a physical SIM configured in a second device; and performing login authentication of an application based on the related information of the target SIM. Optionally, the electronic device further includes a memory. The processor is coupled to the memory.

According to a third aspect, a computer program product is provided. The computer program product includes a computer program (which may also be referred to as code or an instruction). When the computer program is run, the method in the first aspect and any possible implementation of the first aspect is performed.

It should be understood that the second and third aspect of this application correspond to the technical solutions of the first aspect of this application, and beneficial effects achieved by the aspects and corresponding feasible implementations are similar. Details are not described again.

### BRIEF DESCRIPTION OF DRAWINGS

FIG. 1 is a schematic diagram of a structure of an electronic device suitable for a login authentication method according to an embodiment of this application;
FIG. 2 is a schematic block diagram of a structure of software and hardware of an electronic device for a login authentication method according to an embodiment of this application;
FIG. 3 is a schematic flowchart of a solution of one-click login with a local phone number;
FIG. 4 is a schematic diagram of a page suitable for login authentication of an application according to an embodiment of this application;
FIG. 5 and FIG. 6 are schematic diagrams of application scenarios suitable for a login authentication method according to an embodiment of this application;
FIG. 7 is a schematic flowchart of a login authentication method according to an embodiment of this application;
FIG. 8 is a schematic flowchart of obtaining related information of a target SIM according to an embodiment of this application;
FIG. 9 is a schematic flowchart of using a cellular mobile network of a peer device in a near field condition according to an embodiment of this application;
FIG. 10A, FIG. 10B, and FIG. 10C are a schematic diagram of a scenario in which a second device performs login authentication as a proxy of a first device according to an embodiment of this application;
FIG. 11 is a schematic flowchart of logging in to an application by a user by using a first device according to an embodiment of this application;
FIG. 12 is a schematic flowchart of obtaining related information of a target SIM according to another embodiment of this application; and
FIG. 13 is a schematic flowchart of performing login authentication by using a target SIM according to an embodiment of this application.

### DESCRIPTION OF EMBODIMENTS

The following describes technical solutions of this application with reference to the accompanying drawings.

A method provided in embodiments of this application may be applied to an electronic device, for example, a mobile phone, a tablet computer, a smartwatch, a wearable device, a vehicle-mounted device, an augmented reality (augmented reality, AR)/virtual reality (virtual reality, VR) device, a notebook computer, a personal computer (personal computer, PC), an ultra-mobile personal computer (ultra-mobile personal computer, UMPC), a netbook, a personal digital assistant (personal digital assistant, PDA), or a distributed device. A specific type of the electronic device is not limited in embodiments of this application.

In addition, the method in embodiments of this application may support operating environments such as Linux, an Android operating system (Android operating system, Android OS), a HarmonyOS (HarmonyOS), Mac, iOS, Windows, and a lightweight operating system (for example, LiteOS). This is not limited in embodiments of this application.

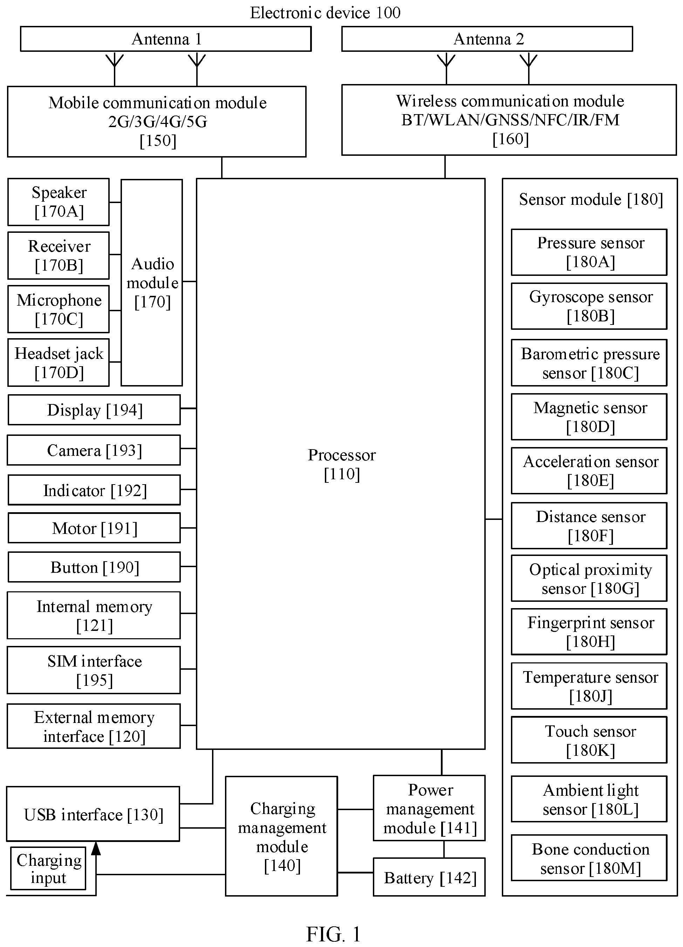

For example, FIG. 1 is a schematic diagram of a structure of an electronic device 100. As shown in FIG. 1, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure illustrated in this application does not constitute a specific limitation on the electronic device 100. In some other embodiments, the electronic device 100 may include more or fewer components than those shown in the figure, some components may be combined, some components may be split, or a different component arrangement may be used. The components shown in the figure may be implemented by hardware, software, or a combination of software and hardware.

The processor 110 may include one or more processing units. For example, the processor 110 may include one or more of an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and a neural-network processing unit (neural-network processing unit, NPU). Different processing units may be separate devices, or may be integrated into one or more processors.

The application processor outputs a sound signal through the audio module 170 (for example, the speaker 170A), or displays an image or a video through the display 194.

The controller may be a nerve center and a command center of the electronic device 100. The controller may generate an operation control signal based on an instruction operation code and a timing signal, to implement control on instruction fetching and execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

The processor 110 may execute instructions to perform different operations, to implement different functions. For example, the instructions may be instructions pre-stored in the memory before the device is delivered from a factory, or may be instructions read, after a user installs a new application (application, APP), from the APP in a use process. This is not limited in embodiments of this application.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM interface, a USB interface, and/or the like.

The I2C interface is a bidirectional synchronous serial bus, including a serial data line (serial data line, SDA) and a serial clock line (serial clock line, SCL). In some embodiments, the processor 110 may include a plurality of groups of I2C buses. The processor 110 may be respectively coupled to the touch sensor 180K, a charger, a camera flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call by using a Bluetooth headset.

The PCM interface may also be configured for audio communication, and may perform sampling, quantization, and encoding on an analog signal. In some embodiments, the audio module 170 may be coupled to the wireless communication module 160 through the PCM bus interface. In some embodiments, the audio module 170 may also transmit an audio signal to the wireless communication module 160 through the PCM interface, to implement a function of answering a call by using a Bluetooth headset. Both the I2S interface and the PCM interface may be configured for audio communication.

The UART interface is a universal serial data bus, and is configured for asynchronous communication. The bus may be a bidirectional communication bus. The bus converts to-be-transmitted data between serial communication and parallel communication. In some embodiments, the UART interface is usually configured to connect to the processor 110 and the wireless communication module 160. For example, the processor 110 communicates with a Bluetooth module in the wireless communication module 160 through the UART interface to implement a Bluetooth function. In some embodiments, the audio module 170 may transmit an audio signal to the wireless communication module 160 through the UART interface, to implement a function of playing music through a Bluetooth headset.

The MIPI may be configured to connect the processor 110 to a peripheral device, for example, the display 194 or the camera 193. The MIPI includes a camera serial interface (camera serial interface, CSI), a display serial interface (display serial interface, DSI), and the like. In some embodiments, the processor 110 communicates with the camera 193 through the CSI, to implement a photographing function of the electronic device 100. The processor 110 communicates with the display 194 through the DSI, to implement a display function of the electronic device 100.

The GPIO interface may be configured by software. The GPIO interface may be configured as a control signal, or may be configured as a data signal. In some embodiments, the GPIO interface may be configured to connect the processor 110 to the camera 193, the display 194, the wireless communication module 160, the audio module 170, the sensor module 180, and the like. The GPIO interface may be further configured as the I2C interface, the I2S interface, the UART interface, the MIPI, or the like.

The USB interface 130 is an interface that conforms to the USB standard specification, and may be specifically a mini USB interface, a micro USB interface, a USB Type-C interface, or the like. The USB interface 130 may be configured to connect the charger to charge the electronic device 100, may be configured to transmit data between the electronic device 100 and the peripheral device, or may be configured to connect a headset, to play audio through the headset. The interface may be further configured to connect another electronic device, for example, an AR device. It can be understood that an interface connection relationship between modules illustrated in this application is merely an illustrative description, and does not constitute a limitation on the structure of the electronic device 100. In some other embodiments, the electronic device 100 may alternatively use an interface connection manner different from that in the foregoing embodiment, or use a combination of a plurality of interface connection manners.

The charging management module 140 is configured to receive charging input from the charger. The charger may be a wireless charger or a wired charger. In some embodiments of wired charging, the charging management module 140 may receive a charging input from a wired charger through the USB interface 130. In some embodiments of wireless charging, the charging management module 140 may receive a wireless charging input through a wireless charging coil of the electronic device 100. The charging management module 140 may further supply power to the electronic device through the power management module 141 while charging the battery 142.

The power management module 141 is configured to connect the battery 142, the charging management module 140, and the processor 110. The power management module 141 receives an input of the battery 142 and/or the charging management module 140, and supplies power to the processor 110, the internal memory 121, an external memory, the display 194, the camera 193, the wireless communication module 160, and the like. The power management module 141 may be further configured to monitor parameters such as a battery capacity, a battery cycle quantity, and a battery health status (leakage and impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna in a wireless local area network. In some other embodiments, an antenna may be used in combination with a tuning switch.

The mobile communication module 150 may provide a wireless communication solution that is applied to the electronic device 100 and that includes 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert the signal into an electromagnetic wave through the antenna 1 for radiation. In some embodiments, at least some function modules of the mobile communication module 150 may be disposed in the processor 110. In some embodiments, at least some function modules of the mobile communication module 150 may be disposed in a same device as at least some modules of the processor 110.

The modem processor may include a modulator and a demodulator. The modulator is configured to modulate a to-be-sent low frequency baseband signal into a medium/high frequency signal. The demodulator is configured to demodulate a received electromagnetic wave signal into a low frequency baseband signal. Then, the demodulator transmits the low frequency baseband signal obtained through demodulation to the baseband processor for processing. The low frequency baseband signal is processed by the baseband processor and then transferred to the application processor. The application processor outputs a sound signal through an audio device (not limited to the speaker 170A or the receiver 170B), or displays an image or a video through the display 194. In some embodiments, the modem processor may be a separate device. In some other embodiments, the modem processor may be independent of the processor 110 and disposed in a same device as the mobile communication module 150 or another function module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more devices integrating at least one communication processing module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave through the antenna 2 for radiation.

In some embodiments, in the electronic device 100, the antenna 1 and the mobile communication module 150 are coupled, and the antenna 2 and the wireless communication module 160 are coupled, so that the electronic device 100 may communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), a 5th generation (5th generation, 5G) communication system, BT, the GNSS, the WLAN, NFC, FM, the IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to perform mathematical and geometric calculation, and render an image. The processor 110 may include one or more GPUs that execute program instructions to generate or change display information.

The display 194 may also be referred to as a screen, and may be configured to display an image, a video, or the like. The display 194 may include a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED (mini-LED), a micro-LED (micro-LED), a micro-OLED (micro-OLED), a quantum dot light-emitting diode (quantum dot light-emitting diode, QLED), or the like. In some embodiments, the electronic device 100 may include one or more displays 194.

It should be understood that the display 194 may further include more components, for example, a backlight panel or a drive circuit. The backlight panel may be configured to provide a light source. The display panel emits light based on the light source provided by the backlight panel. The drive circuit may be configured to control a liquid crystal of a liquid crystal layer to transmit light or not to transmit light.

The electronic device 100 may implement a shooting function through the ISP, the camera 193, the video codec, the GPU, the display 194, the application processor, and the like.

The ISP is configured to process data fed back by the camera 193. For example, during photographing, a shutter is opened, and light is transmitted to a photosensitive element of the camera through a lens. An optical signal is converted into an electrical signal. The photosensitive element of the camera transmits the electrical signal to the ISP for processing, to convert the electrical signal into a visible image. The ISP may further perform algorithm optimization on image noise, brightness, and a skin tone. The ISP may further optimize parameters such as exposure and a color temperature in a shooting scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into a standard image signal in a format of RGB, YUV, or the like. In some embodiments, the electronic device 100 may include one or more cameras 193.

The digital signal processor is configured to process a digital signal, and may process another digital signal in addition to the digital image signal. For example, when the electronic device 100 selects a frequency, the digital signal processor is configured to perform Fourier transform on frequency energy.

The video codec is configured to compress or decompress a digital video. The electronic device 100 may support one or more types of video codecs. In this way, the electronic device 100 may play or record videos in a plurality of encoding formats, for example, moving picture experts group (moving picture experts group, MPEG)-1, MPEG-2, MPEG-3, and MPEG-4.

The external memory interface 120 may be configured to connect an external memory card, for example, a micro SD card, to extend a storage capability of the electronic device 100. The external memory card communicates with the processor 110 through the external memory interface 120, to implement a data storage function. For example, files such as music and videos are stored in the external memory card.

The internal memory 121 may be configured to store computer-executable program code. The executable program code includes instructions. The processor 110 performs various function applications and data processing of the electronic device 100 by running the instructions stored in the internal memory 121. The internal memory 121 may include a program storage region and a data storage region. The program storage region may store an operating system, an application required for at least one function (for example, a sound play function and an image play function), and the like. The data storage region may store data (for example, audio data and a phonebook) created in a process of using the electronic device 100, and the like. In addition, the internal memory 121 may include a high-speed random access memory, and may further include a non-volatile memory, for example, at least one magnetic disk storage device, a flash memory, and a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The SIM interface 195 is configured to connect a SIM. The SIM may be inserted into the SIM interface 195 or removed from the SIM interface 195, to implement contact with or separation from the electronic device 100. The electronic device 100 may support one or more SIM interfaces. The SIM interface 195 may support a nano-SIM, a micro-SIM, a SIM, and the like. A plurality of SIMs may be simultaneously inserted into a same SIM interface 195. The plurality of SIMs may be of a same type or of different types. The SIM interface 195 may also be compatible with different types of SIMs. The SIM interface 195 may also be compatible with the external memory card. The electronic device 100 interacts with a network through the SIM, to implement functions such as calling and data communication. In some embodiments, the electronic device 100 uses an eSIM, that is, an embedded SIM. The eSIM may be embedded into the electronic device 100, and cannot be separated from the electronic device 100.

It may be understood that the structure illustrated in this application does not constitute a specific limitation on the electronic device 100. In some other embodiments, the electronic device 100 may include more or fewer components than those shown in the figure, some components may be combined, some components may be split, or a different component arrangement may be used. The components shown in the figure may be implemented by hardware, software, or a combination of software and hardware.

A software system of the electronic device 100 may use a layered architecture, an event-driven architecture, a microkernel architecture, a microservice architecture, or a cloud architecture. In this application, an Android system of a layered architecture is used as an example to describe a software structure of the electronic device 100. A type of an operating system of the electronic device is not limited in this application, for example, is an Android system or a HarmonyOS.

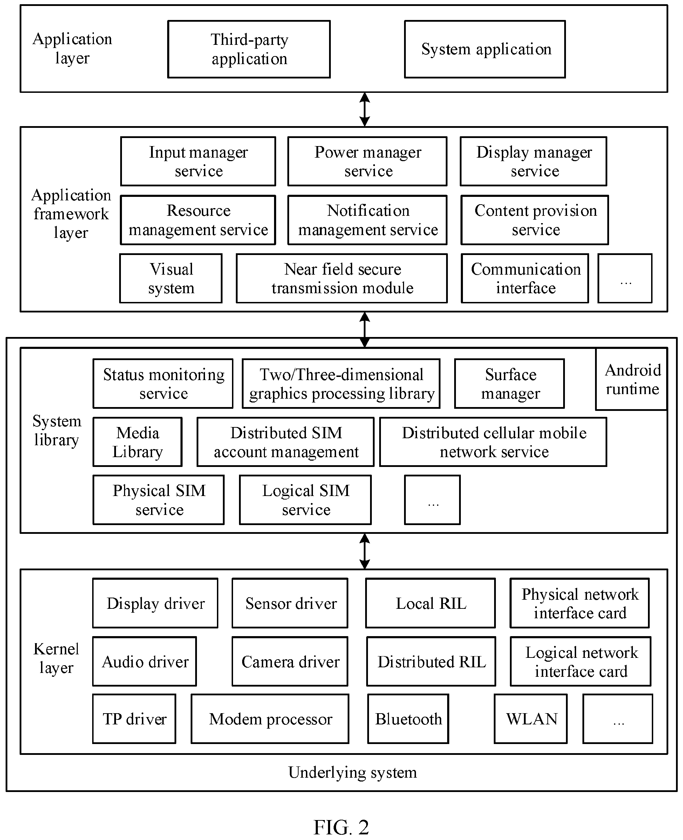

FIG. 2 is a block diagram of a structure of software and hardware of the electronic device suitable for a login authentication method according to an embodiment of this application.

As shown in FIG. 2, software is divided into several layers by using the layered architecture, and each layer has a clear role and task. The layers communicate with each other through a software interface. In some embodiments, the Android system is divided into four layers: an application layer, an application framework layer, an Android runtime (Android runtime) and system library layer, and a kernel layer from top down.

The application layer may include a series of application packages. As shown in FIG. 2, applications may include a system application and a third-party application. The system application may further include, for example, "camera", "gallery", "calendar", "phone", and "messages".

The application framework layer provides an application programming interface (application programming interface, API) and a programming framework for the application at the application layer. The application framework layer includes some predefined functions. As shown in FIG. 2, the application framework layer may include an input manager service (input manager service, IMS), a power manager service (power manager service, PMS), a display manager service (display manager service, DMS), a resource management service, a notification management service, a content provision service, a view system, and the like. This is not limited in this embodiment of this application.

The resource management service provides various resources for an application, for example, a localized character string, an icon, a picture, a layout file, and a video file.

The notification management service enables an application to display notification information in a status bar, which may be used to convey a notification-type message and may automatically disappear after a short stay without user interaction. For example, the notification manager is used to notify download completion and provide a message notification. The notification manager may alternatively be a notification that appears in a status bar at a top of the system in a form of a chart or scroll bar text, for example, a notification for an application running in the background, or may be a notification that appears on the screen in a form of a dialog window. For example, text information is displayed in the status bar, an announcement is given, the electronic device vibrates, or the indicator light blinks.

The content provision service may be used to store and obtain data and make the data accessible to applications. The data may include a video, an image, audio, calls that are made and received, browsing history and bookmarks, a phonebook, and the like.

The view system includes visual controls such as a control for displaying a text and a control for displaying a picture. The view system may be used to construct an application. A display interface may include one or more views. For example, a display interface including a short message service notification icon may include a view for displaying a text and a view for displaying a picture.

In this embodiment of this application, as shown in FIG. 2, the application framework layer may further include a communication interface and a near field secure transmission module.

The communication interface may be configured for cellular wireless communication between the system application, the third-party application, and a system service. In this embodiment of this application, the communication interface includes at least a related interface for obtaining a SIM account, a related interface for requesting to establish a cellular mobile network, a related interface for performing network access by using a corresponding cellular mobile network, and the like.

The near field secure transmission module is a function module abstracted based on a near field communication capability such as Bluetooth and a WLAN. The near field secure transmission module may not necessarily exist at a physical level, but in function implementation, the module may implement a corresponding function by using program code. The near field secure transmission module may be configured for near field secure transmission between a primary device and another device, and may include device discovery, identity authentication, security verification, and secure transmission in a plurality of manners between electronic devices, so that instructions, information, network data, and the like related to distributed SIM account login authentication may be securely transmitted between the electronic devices.

It should be understood that at the physical level, the near field secure transmission module may use a physical communication element in a near field and/or a local area network, including but not limited to a Bluetooth communication element, a WLAN communication element, and a WLAN direct communication element. At a system level, the near field secure transmission module may be configured to discover a nearby electronic device, may be configured to authenticate whether devices that need to establish a connection belong to a same user, or may be configured to securely transmit information between electronic devices that establish a connection.

Android runtime may include a kernel library and a virtual machine. The Android runtime is responsible for scheduling and managing the Android system.

The kernel library may include two parts: a function to be called by the Java language, and a kernel library of the Android system.

The application layer and the application framework layer run on the virtual machine. The virtual machine executes Java files at the application layer and the application framework layer as binary files. The virtual machine is configured to implement functions such as object lifecycle management, stack management, thread management, security and exception management, and garbage collection.

The system library may include a plurality of function modules, for example, a status monitoring service, a surface manager (surface manager), a media library (media library), a three-dimensional graphics processing library (for example, OpenGLES), and a two-dimensional (two-dimensional, 2D) graphics engine (for example, SGL).

The status monitoring service is used to determine a specific orientation of the mobile phone, a physical status of a flexible display, and the like based on monitoring data reported by the kernel layer. The surface manager is used to manage a display subsystem and provide a fusion of 2D and 3D (three-dimensional, 3D) layers for a plurality of applications. The media library supports playback and recording in a plurality of common audio and video formats, static image files, and the like. The media library may support a plurality of audio and video encoding formats, for example, MPEG-4, H.264, MP3, AAC, AMR, JPG, and PNG. The three-dimensional graphics processing library is used to implement three-dimensional graphics drawing, image rendering, composition, layer processing, and the like. The 2D graphics engine is a drawing engine for 2D drawing.

In this embodiment of this application, as shown in FIG. 2, the system library may further include a distributed account management service, a distributed cellular network service, a physical SIM service, a logical SIM service, and the like.

The distributed SIM account management service may correspond to a SIM account management service in a general intelligent mobile electronic device system. A difference between the distributed SIM account management service and the general SIM account management service lies in that the distributed SIM account management service supports management of SIM account information of the another device when secure near field transmission is established.

The distributed cellular mobile network service may correspond to a cellular mobile network service in the general intelligent mobile electronic device system. A difference between the distributed cellular mobile network service and the general cellular mobile network service lies in that the distributed cellular mobile network service allows an intelligent mobile electronic device to use a cellular mobile network of the intelligent mobile electronic device, that is, a physical network, or a cellular mobile network of the another device in a near field condition, that is, a logical network, and supports network data transmission with the cellular mobile network of the intelligent mobile electronic device or the another device in the near field condition.

The physical network is a cellular mobile network that may be established based on a physical network interface card corresponding to a physical SIM. It should be understood that an application may send, to the system, a request for establishing a cellular mobile network, and the system determines, based on whether the cellular mobile network is currently started, whether to start the cellular mobile network. If the cellular mobile network is started, related network information is directly returned to the application; or if the cellular mobile network is not started, the corresponding cellular mobile network is first started, and then related network information is returned. The application may further receive and send a data packet by using a specified distributed cellular mobile network service. In this embodiment of this application, there is necessarily a physical network on the primary device, to meet a requirement of a user for login authentication with a SIM; and there may or may not be a physical network on the another device.

The logical network is a cellular mobile network that may be established based on a logical network interface card corresponding to a logical SIM in the another device in the near field condition. It should be understood that the logical network has a system capability of the foregoing physical network, and each logical network corresponds to one physical network of this electronic device or the another electronic device. When an application sends a request for establishing a cellular mobile network, the cellular mobile network is established on a corresponding logical network interface card. When the application receives and sends a data packet through the logical network, the data packet is received and sent through a corresponding physical network. In this embodiment of this application, there is necessarily a logical network on the another device, and there may or may not be a logical network on the primary device.

The physical SIM service may store information about a SIM that is actually inserted and used on the current device. The application may query the information through the communication interface. It should be understood that in this embodiment of this application, there is necessarily a physical SIM service on the primary device, to meet the requirement of the user for login authentication with the SIM, and there may or may not be a physical SIM service on the another device in the near field condition.

The logical SIM service may abstract physical SIM information of this electronic device or the another electronic device in the near field condition to this electronic device, and present the physical SIM information to the outside in a form of a SIM in this electronic device. It should be understood that each logical SIM service may correspond to one physical SIM service of this electronic device or the another electronic device. When an application accesses a related communication interface of the SIM, related information of the logical SIM may be returned based on a current service requirement. It should be further understood that in this embodiment of this application, there is necessarily a logical SIM service on the another device, and there may or may not be a logical SIM service on the primary device.

The kernel layer is a layer between the hardware and the software. The kernel layer includes at least a power manager service, a sensor service (which may also be referred to as a sensor driver), a display service (which may also be referred to as a display driver), a camera driver, an audio driver, and the like. This is not limited in embodiment of this application.

In this embodiment of this application, as shown in FIG. 2, the kernel layer may further include a local radio interface layer (radio interface layer, RIL), a distributed RIL, a physical network interface card, a logical network interface card, the modem processor, Bluetooth, a WLAN, and the like.

The RIL is a wireless communication hardware interface layer corresponding to the physical SIM service, may be used to access the wireless modem processor to obtain related information of the physical SIM, and may use a function of the physical SIM. It should be understood that generally, the electronic device has only the local RIL. In this embodiment of this application, the distributed RIL that does not exist at the physical level may be abstracted, and the distributed RIL may be used to map information and a function of the physical SIM on the another device.

The physical network interface card may also be referred to as a local network interface card. The physical network interface card is a network communication interface layer corresponding to a physical network, and may be used by the electronic device to access the internet. It should be understood that generally, the electronic device has only the physical network interface card. In this embodiment of this application, a distributed network interface card that does not exist at the physical level, that is, the logical network interface card, may be abstracted. The logical network interface card may be used to map a network communication capability of the another device. To be specific, the logical network interface card is a network communication interface layer corresponding to the logical network.

It should be noted that in this embodiment of this application, the Bluetooth, the WLAN, and the like have a near field secure transmission capability, and may be used as function support of the near field secure transmission module.

For ease of understanding embodiments of this application, terms used in this application are first briefly described.
1. Primary device: It may be an electronic device into which a SIM for login authentication of an application is inserted.
2. Another device: It may be a non-SIM device or another SIM device, but a SIM in the SIM device is not configured for login authentication of an application.

It should be understood that both the primary device and the another device may correspond to the electronic device 100 shown in FIG. 1. The primary device includes at least one or more processors, a modem (modem), a Bluetooth communication element or chip for near field secure transmission, a WLAN communication element or chip, and/or another communication element or chip that may be configured for near field secure transmission. The another device includes at least one or more processors, a Bluetooth communication element or chip for near field secure transmission, a WLAN communication element or chip, and/or another communication element or chip that may be configured for near field secure transmission.
3. Near field secure transmission: It may mean that secure communication, for example, secure data transmission, may be performed between devices (for example, between the foregoing primary device and another device) in a near field condition. For example, secure communication may be performed between the devices based on a communication function of the wireless communication module 160 of the electronic device 100 in FIG. 1. A prerequisite of near field secure transmission is to establish a near field secure transmission connection. In a possible implementation, establishing the near field secure transmission connection may include discovering a near field device, performing verification on the near field device, and establishing the connection between the devices. It should be understood that in embodiments of this application, the connection is established between the devices only after the near field device is successfully verified, and secure communication can be performed between the devices only after the connection is successfully established. Otherwise, the connection fails to be established between the devices, and secure communication cannot be performed between the devices.
4. Near field device: It may be an electronic device in a near field condition. In embodiments of this application, the near field condition may mean that a near field secure transmission connection may be established between devices. For example, in a possible implementation, secure communication is performed between electronic devices by using Bluetooth. A Bluetooth communication protocol may implement device discovery within a range of 50 meters. All electronic devices with a Bluetooth function in a circular region whose circle center is a device with the Bluetooth function enabled and radius is 50 meters are near field devices (including the device with the Bluetooth function enabled). However, it may be understood that a device in this circular region can establish a Bluetooth connection to the device in the circle center and perform secure communication by using Bluetooth only when the Bluetooth function is enabled. It should be understood that the near field device is not limited to performing secure communication by using Bluetooth, and a manner of implementing near field secure transmission is not limited to Bluetooth. A device capable of establishing a connection in a specific manner and implementing secure communication may be considered as a near field device.
5. Primary SIM: It may be a SIM that is inserted into a "dual SIM dual standby" device or a "multiple SIM multiple standby" device and is set as "default mobile data".
6. Secondary SIM: It may be a SIM that is inserted into a "dual SIM dual standby" device or a "multiple SIM multiple standby" device and that is not set as "default mobile data".

It should be noted that in the terms in this application, the device, the primary device, the another device, the near field device, and the like may all correspond to the schematic diagram of the structure of the electronic device 100 in FIG. 1.

In the mobile internet era, in addition to user communication functions such as a phone call or a short message service, a SIM mobile number starts to be used more for daily account authentication. A user has accounts for various types of applications in a mobile network, for example, social, media, communication, and finance applications. For each account, identity information of the user needs to be verified. Currently, verification with a SIM mobile number is a most common verification method for each application. In daily life, when the user uses various applications, a first step is basically to perform login authentication by using a mobile number of the user. A conventional and common login authentication manner is to perform login authentication by using a short message service verification code sent to the mobile number. In this manner, the user needs to switch back and forth between a short message service reading page and a login authentication page. Such an operation process is inconvenient for the user. A technical solution of "one-click login with a local phone number" is developed, to resolve the problem of inconvenience in operations for performing login authentication by using the short message service verification code sent to the mobile number. It should be understood that the "local phone number" and the "SIM mobile number" are consistent, and both may represent the mobile number of the user.

7. Abstraction: It may mean that some corresponding functions may be implemented by using program code or in another manner for a module, a service, a unit, or the like that does not exist physically. For example, although the foregoing distributed RIL, logical network interface card, logical SIM service, or near field secure transmission module may not exist at the physical level, in function implementation, corresponding functions may be implemented by using program code.

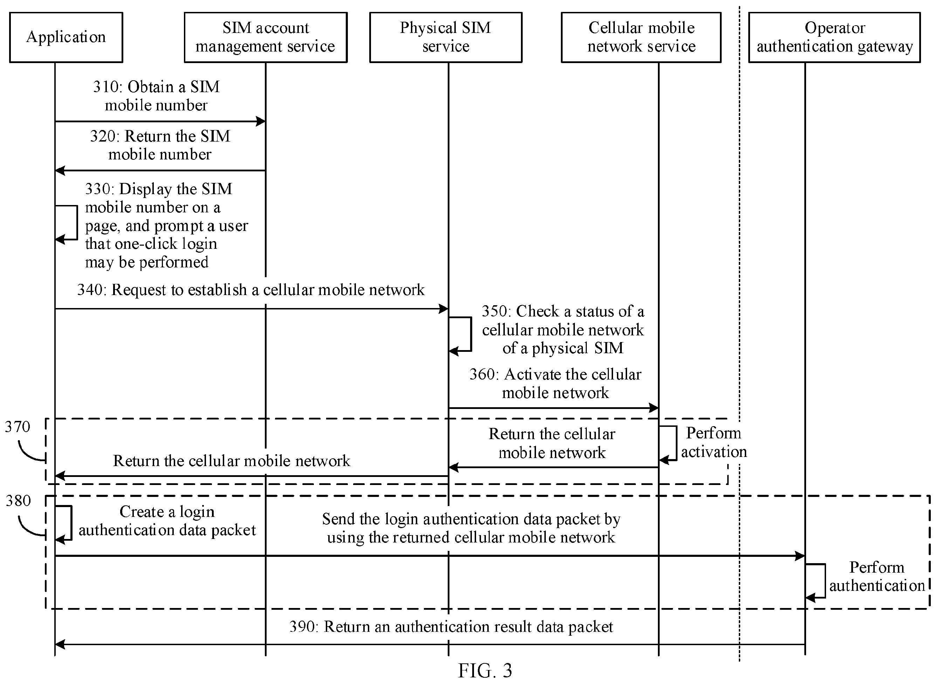

The following briefly describes the solution of "one-click login with a local phone number" with reference to FIG. 3.

FIG. 3 is a schematic flowchart of the solution of "one-click login with a local phone number". As shown in FIG. 3, a process of the solution of "one-click login with a local phone number" may include step 310 to step 390. The following briefly describes the steps in FIG. 3.

In step 310, an application requests a SIM mobile number from a SIM account management service.

In step 320, the SIM account management service returns the SIM mobile number to the application.

In step 330, the application displays the obtained SIM mobile number on a user interface (user interface, UI), and prompts a user that one-click login may be performed.

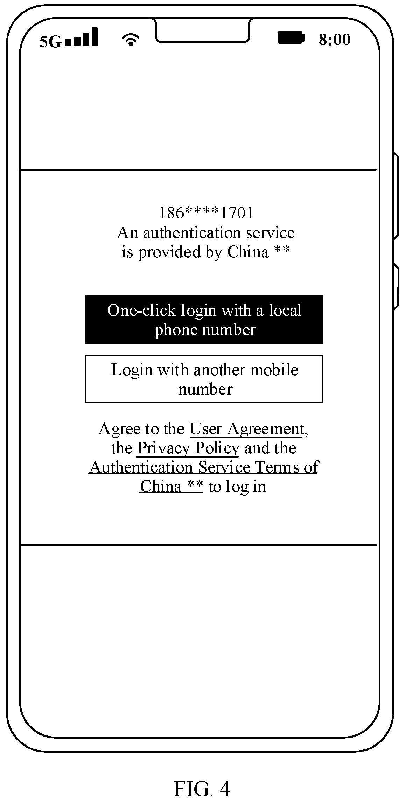

For example, as shown in FIG. 4, the application may display, on the user interface, the obtained SIM mobile number for login authentication, for example, a SIM mobile number "186****1701" in FIG. 4, and may provide two operation options for the user. One operation may be "One-click login with a local phone number". For example, the user may use the currently obtained SIM mobile number "186****1701" for login authentication. The other operation may be "Login with another mobile number". For example, the user can click this operation option to reselect a SIM mobile number for login authentication. It should be understood that the user interface is merely an example, and the obtained SIM mobile number may be displayed in another interface style. This is not limited in this application.

In step 340, the application sends, to a physical SIM service, a request for establishing a cellular mobile network.

In step 350, the physical SIM service checks a status of the cellular mobile network of a physical SIM.

In step 360, when the cellular mobile network of the physical SIM is in an unactivated state, the physical SIM service sends, to a cellular mobile network service, an instruction for activating the cellular mobile network.

In step 370, after receiving the instruction for activating the cellular mobile network from the physical SIM service, the cellular mobile network service activates the cellular mobile network, and returns the cellular mobile network to the physical SIM service. Then, the physical SIM service returns the cellular mobile network to the application.

It should be understood that returning to the cellular mobile network may be specifically returning a carrier for receiving and sending TCP/TP data. The carrier may be understood as an instance. The instance may be used to implement a data receiving and sending function, for example, may include program code for implementing data receiving and sending.

In step 380, the application creates a login authentication data packet, and sends the login authentication data packet to an operator authentication gateway for authentication. The operator authentication gateway performs authentication.

In step 390, the operator authentication gateway returns an authentication result data packet to the application.

It should be understood that the login authentication data packet may be sent to the operator authentication gateway for login authentication, and the authentication result data packet may be a data packet received from the operator authentication gateway, and may indicate an authentication result. In this specification, the data packets are named only for ease of distinguishing between different data packets. A specific name of the data packet is not limited in embodiments of this application. For brevity, descriptions of a same or similar case are omitted below.

Through the foregoing steps, the user may complete login authentication of the application by using a method of one-click login with a local phone number. However, in this method, only when a SIM is inserted into an electronic device currently used by the user, and the SIM is a default mobile data service SIM, a one-click login authentication function may be provided for the SIM in the electronic device currently used by the user. Therefore, this method has some limitations. For example, login authentication of the application cannot be conveniently completed on an electronic device into which no SIM is inserted. For another example, even if a SIM is inserted into an electronic device, but the SIM is not set as a default mobile data service SIM, the electronic device cannot conveniently complete login authentication of the application.

For the examples listed above, this application provides a login authentication method, to resolve a problem that the electronic device cannot conveniently complete login authentication of the application. Related information of a SIM selected by the user (or specified by the user) for login authentication is obtained, and login authentication of the user for the application is implemented by using the SIM. In this way, the user can conveniently complete login authentication of the application by using any electronic device of the user.

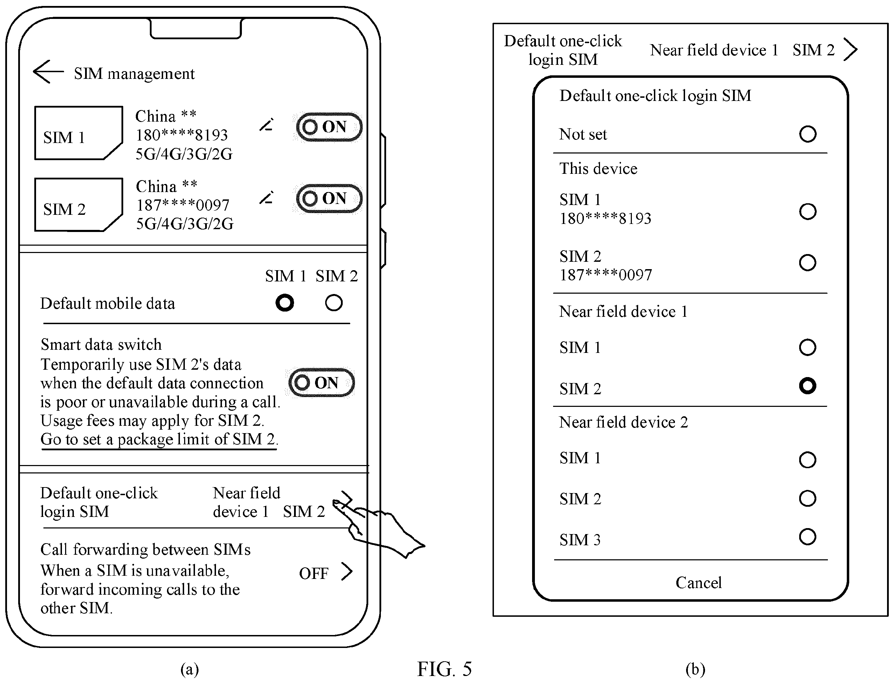

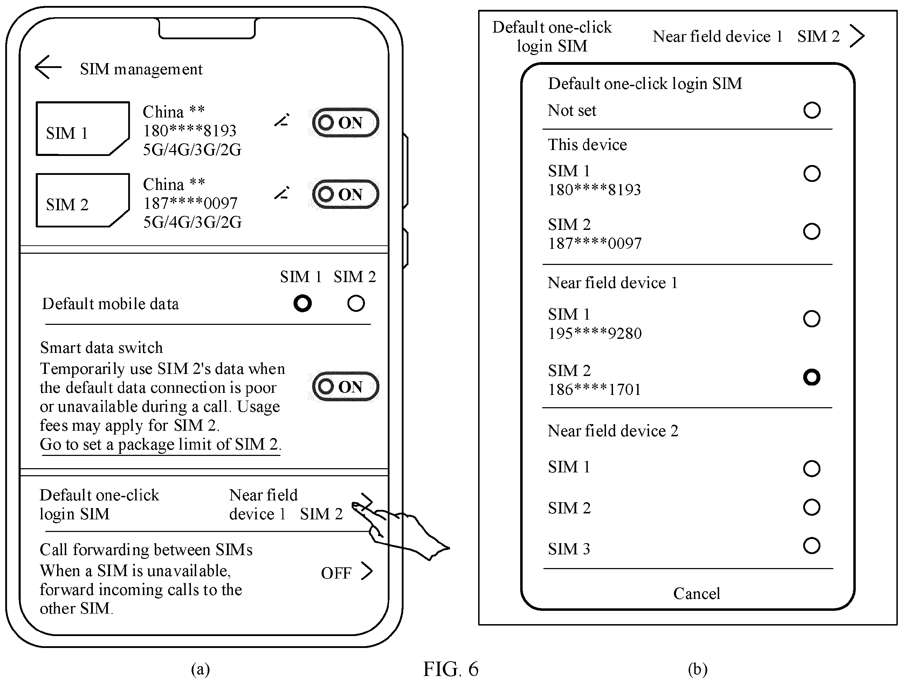

For ease of understanding the method provided in embodiments of this application, an application scenario suitable for embodiments of this application is first described in detail with reference to FIG. 5 and FIG. 6. FIG. 5 and FIG. 6 are schematic diagrams of the application scenarios suitable for the login authentication method according to an embodiment of this application.

FIG. 5 shows a "dual SIM dual standby" electronic device. Two physical SIMs are inserted into the electronic device. When a near field secure transmission connection is not established with a near field device, a user may also preset a SIM that the user wants to use for one-click login authentication. This scenario may be a case in which the electronic device does not establish the near field secure transmission connection to the near field device, or a case in which the electronic device has established a secure near field secure transmission connection to one or more near field devices, but no physical SIM is inserted into the near field device that establishes the secure near field secure transmission connection to the near field device. On a page shown in (a) in FIG. 5, before the electronic device establishes a near field secure transmission connection to another electronic device, the user may preset a SIM 2 in a near field device 1 as a "default one-click login SIM". For example, the user may click the "Default one-click login SIM" to enter an operation interface. (b) in FIG. 5 shows an example of the operation interface. As shown in the figure, a number corresponding to the SIM 2 in the near field device 1 is empty. The number corresponding to the SIM 2 in the near field device 1 is empty because the electronic device does not establish the near field secure transmission connection to the another electronic device (that is, the near field device 1). Alternatively, the number corresponding to the SIM 2 in the near field device 1 is empty because the electronic device has established the near field secure transmission connection to the near field device 1, but no physical SIM is inserted into the near field device 1 as the SIM 2, and related information of a physical SIM in the near field device 1 is not obtained through sharing. Similarly, there are also the foregoing two possibilities for why a corresponding number of a near field device 2 is empty, and details are not described herein again. It should be understood that one electronic device may simultaneously establish near field secure transmission connections to a plurality of electronic devices. Therefore, (b) in FIG. 5 further shows options related to the near field device 2. An actual scenario is not limited to a case in which near field secure transmission connections can be established to only two devices. To be specific, this setting page is not limited to displaying only the "Near field device 1" and the "Near field device 2", and there may be more near field device options. A quantity of displayed near field devices is not specifically limited in this embodiment.

It should be further understood that a SIM 1 and a SIM 2 in this device correspond to physical SIMs provided by a specific operator, and related SIMs of the near field device 1 and the near field device 2 correspond to logical SIMs. The physical SIM may correspond to a physical SIM service. The logical SIM may correspond to a logical SIM service.

Different from FIG. 5, FIG. 6 shows that when a physical SIM is inserted into the near field device 1, the electronic device establishes a near field secure transmission connection to the near field device 1, and obtains related information of the physical SIM in the near field device 1. When a near field secure transmission connection is established with a near field device, the user may also preset a SIM that the user wants to use for one-click login authentication. The user may enter "SIM management" through "Settings", as shown in (a) in FIG. 6. The user may set the "Default one-click login SIM". For example, the user may click the "Default one-click login SIM" to enter an operation interface. (b) in FIG. 6 shows the operation interface. Then, the user may select a SIM mobile number for login through a manual operation, for example, clicking. As shown in the figure, the user selects the SIM 2 in the near field device 1 as the default one-click login SIM. It should be understood that the user may alternatively select another SIM as the default one-click login SIM. This is not limited in embodiments of this application.

In addition, it should be further understood that although the SIM 2 in this device is a non-default mobile data SIM, the user may also select the SIM 2 in this device as the default one-click login SIM. When a physical SIM in this device is selected as the default one-click login SIM, this device may not establish the near field secure transmission connection to the near field device. It should be understood that FIG. 5 and FIG. 6 are merely examples. The electronic device may also be a "single SIM single standby" device, that is, only one physical SIM slot is configured. Alternatively, the electronic device may be a "dual SIM dual standby" device, or a "multiple SIM multiple standby" device, that is, two or more physical SIM slots may be configured. In addition, operation interfaces of the "SIM management" and the "Default one-click login SIM" shown in FIG. 5 and FIG. 6 may display fewer or more near field devices and corresponding SIMs. This is not limited in embodiments of this application.

With reference to FIG. 5 and FIG. 6, there may be two cases for the login authentication method provided in this application.

Case 1: A near field secure transmission connection is established between electronic devices, and a SIM in a near field device is used as a default one-click login SIM to perform login authentication of an application.

Case 2: There is a single electronic device, and a non-default mobile data SIM in this device is used as a default one-click login SIM to perform login authentication of an application.

The following describes in detail the login authentication method provided in embodiments of this application with reference to the accompanying drawings.

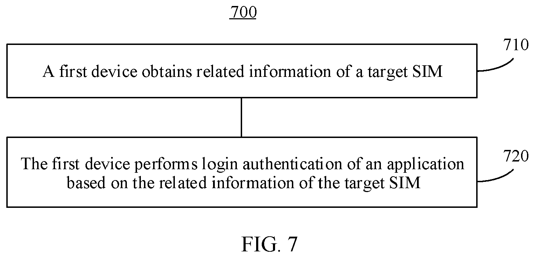

FIG. 7 is a schematic flowchart of the login authentication method according to an embodiment of this application. The method shown in FIG. 7 may be performed by an electronic device. The electronic device may be an electronic device on which a user is attempting to log in to an application. As shown in FIG. 7, the method 700 may include step 710 and step 720. The following describes the steps in FIG. 7 in detail.

In step 710, a first device obtains related information of a target SIM.

It should be understood that the target SIM is a SIM selected by the user (or specified by the user) for one-click login, that is, the default one-click login SIM described above with reference to FIG. 5 and FIG. 6. Corresponding to Case 1, the target SIM may be a physical SIM configured in a second device. Corresponding to Case 2, the target SIM may be a physical SIM configured in the first device but not set as default mobile data. The related information of the target SIM may include but is not limited to, for example, an integrated circuit card identity (Integrated circuit card identity, ICCID), a SIM mobile number, and user identity information bound to the target SIM. The ICCID is a unique identification number of the SIM, and is equivalent to an identity card number of the SIM.

In step 720, the first device performs login authentication of an application based on the related information of the target SIM.

The electronic device may perform login authentication by using a corresponding cellular mobile network based on the related information of the target SIM. Specifically, the electronic device may send a login authentication data packet to an operator authentication gateway by using a cellular mobile network of the target SIM, to obtain an authentication result data packet returned by the operator authentication gateway to the target SIM. Further, corresponding to Case 1, if the target SIM is the physical SIM in the second device, the first device may send the login authentication data packet to the second device, so that the second device sends the login authentication data packet to the operator authentication gateway by using the cellular mobile network of the target SIM. Corresponding to Case 2, if the target SIM is the physical SIM in the first device, the first device may directly send the login authentication data packet to the operator authentication gateway by using the cellular mobile network of the target SIM.

It should be understood that the "login authentication data packet" and the "authentication result data packet" may be, for example, hypertext transfer protocol (hypertext transfer protocol, HTTP) data packets, hypertext transfer protocol over secure socket layer (hypertext transfer protocol over secure socket layer, HTTPS) data packets, or other standard or non-standard network protocol data packets. The login authentication data packet and the authentication result data packet may include but are not limited to some or all of the following items: related information of the device, the ICCID, the SIM mobile number, the user identity information bound to the SIM, and the like, which are mainly used to verify whether the device matches the SIM, whether a SIM mobile number used by the cellular mobile network for sending the data packet corresponds to the SIM mobile number carried in the data packet, and the like.

It may be understood that communication between the target SIM and the operator authentication gateway may be implemented by using the cellular mobile network of the target SIM.

After login authentication of the application is completed based on the related information of the target SIM, the user may access the application on the electronic device.

In actual application, the user may preset the target SIM for one-click login authentication, or may not preset the target SIM.

For example, in Case 1, if the user presets the target SIM for one-click login authentication:
when a near field secure transmission connection is established between the electronic devices, and the first device obtains a target SIM mobile number (for example, the SIM 2 in the near field device 1 in FIG. 6) from the second device, the target SIM mobile number may be displayed on a login authentication page of the application, for example, "one-click login with another mobile number" is displayed, and the target SIM number is displayed. The user may directly use the target SIM mobile number for one-click login authentication of the application.

When no near field secure transmission connection is established between the electronic devices, the first device cannot obtain a target SIM mobile number (for example, the SIM 2 in the near field device 1 in FIG. 5) from the second device through sharing; or when a near field secure transmission connection is established between the electronic devices, but no physical SIM is inserted into the second device, the first device does not obtain a target SIM mobile number (for example, the SIM 2 in the near field device 1 in FIG. 5) from the second device through sharing. When the user starts the application and login authentication is performed, a one-click login authentication page of the application may not be directly entered.

In a possible design, the application may prompt the user that the target SIM mobile number for one-click login authentication is not obtained, and ask the user whether to reselect the target SIM for one-click login. If the user agrees to reselect the target SIM, the application may present a default one-click login SIM setting page (as shown in FIG. 5 or FIG. 6) to the user when obtaining corresponding permission, and the user may reselect the target SIM for one-click login authentication on the page. When reselecting the target SIM for one-click login authentication, the user may select a SIM in another near field device as the target SIM, or may select a physical SIM in this device as the target SIM. This is not limited in this embodiment of this application.

In another possible design, the application may directly provide a page for the user to enter the target SIM mobile number, and perform login authentication based on the target SIM mobile number entered by the user. The application may perform login authentication based on an existing process of login with a SIM mobile number.

It should be understood that as two possible designs of the application, the foregoing two possible designs are merely two possible examples, and shall not constitute any limitation on this application. The application may also interact with the user in another manner, to implement a subsequent login authentication process.

For example, in Case 2, for a multiple SIM multiple standby device, if the user presets the target SIM for one-click login authentication (that is, a physical SIM set as the default mobile data, or a physical SIM not set as the default mobile data):
when a physical SIM (the physical SIM set as the default mobile data or the physical SIM not set as the default mobile data) corresponding to the target SIM preset by the user for one-click login authentication is inserted into the electronic device, the electronic device may obtain a target SIM mobile number. The electronic device may display "one-click login with a local phone number" on a login authentication page of the application, and display the target SIM mobile number (as shown in FIG. 4). The user may directly use the target SIM mobile number for login authentication of the application.

When the target SIM preset by the user for one-click login authentication for login authentication is the physical SIM not set as the default mobile data, but the physical SIM not set as the default mobile data is not inserted into the electronic device, when the user starts the application and login authentication is performed, a one-click login authentication page of the application may not be directly entered.

In a possible design, the application may prompt the user that the target SIM mobile number for one-click login authentication is not obtained, and ask the user whether to reselect the target SIM for one-click login. If the user agrees to reselect the target SIM, the application may present a default one-click login SIM setting page (as shown in FIG. 5 or FIG. 6) to the user when obtaining corresponding permission, and the user may reselect the target SIM for one-click login authentication on the page. It should be understood that when reselecting the target SIM for one-click login authentication, the user may select a SIM in another near field device as the target SIM, or may select the physical SIM set as the default mobile data or another physical SIM not set as the default mobile data in this device as the target SIM. This is not limited in this application.

In another possible design, the application may directly provide a page for the user to enter the target SIM mobile number, and perform login authentication based on the target SIM mobile number entered by the user. The application may also perform login authentication based on an existing process of login with a SIM mobile number.

It should be understood that as two possible designs of the application, the foregoing two possible designs are merely two possible examples, and shall not constitute any limitation on this application. The application may also interact with the user in another manner, to implement a subsequent login authentication process.

If the user does not preset the target SIM for one-click login authentication, when the user starts the application and login authentication is performed:
for example, when a physical SIM is inserted into the electronic device, the electronic device may use a physical SIM set as the default mobile data in the electronic device as the target SIM, and the electronic device may obtain a target SIM mobile number. The electronic device may display "one-click login with a local phone number" on a login authentication page of the application, and display the target SIM mobile number (as shown in FIG. 4). The user may directly use the target SIM mobile number for login authentication of the application. Alternatively, the user may select another SIM mobile number by using another interface provided by the application on the login authentication page for login authentication. It should be understood that when the user selects to use the another SIM mobile number for login authentication, the user may select a physical SIM not set as the default mobile data in the electronic device as the target SIM, or may select a SIM in a near field device as the target SIM. This is not limited in this application.

For example, when no physical SIM is inserted into the electronic device, the electronic device cannot obtain a physical SIM. When the user starts the application and login application is performed, a one-click login authentication page of the application may not be directly entered.

In a possible design, the application may prompt the user that the target SIM mobile number for one-click login authentication is not obtained, and indicate the user to reselect the target SIM for one-click login authentication. In this case, if there is a near field device, the user may select to use a SIM in the near field device for login authentication; or if there is no near field device, the electronic device may fail to implement login authentication of the application.

In another possible design, the application may directly provide a page for the user to enter the target SIM mobile number, and perform login authentication based on the target SIM mobile number entered by the user. The application may perform login authentication based on an existing process of login with a SIM mobile number.

It should be understood that as two possible designs of the application, the foregoing two possible designs are merely two possible examples, and shall not constitute any limitation on this application. The application may also interact with the user in another manner, to implement a subsequent login authentication process.

In the following embodiment, step 710 and step 720 are separately described in more detail based on an assumption that the user presets the target SIM and with reference to the foregoing two cases (Case 1 and Case 2).

### Case 1:

For ease of distinguishing and description, a device used by the user to attempt to log in to the application is denoted as the first device. The first device may be a non-SIM device. Alternatively, the physical SIM in the first device is not set as the default one-click login SIM. For example, as shown in FIG. 5 and FIG. 6, a SIM 1 and a SIM 2 in the first device are physical SIMs, but are not set as the default one-click login SIM. The SIM 2 in the near field device 1 is the default one-click login SIM, and the SIM is a logical SIM. A physical SIM corresponding to the logical SIM is configured in the second device, that is, the near field device 1 is the second device. To be specific, the second device is the foregoing primary device, and the first device is the foregoing another device. In this embodiment of this application, the first device and the second device are near field devices.

Case 1 involves the following two key technologies.

A key technology 1 is that related information of SIMs is securely shared between near field devices.

A key technology 2 is that near field devices perform network access by using a cellular mobile network of a specified SIM of each other.

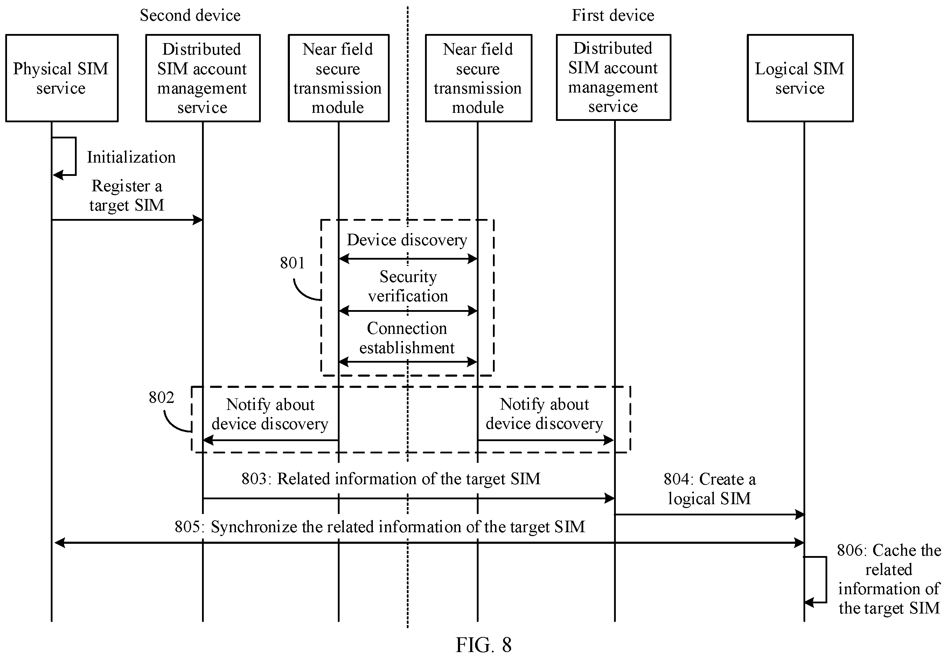

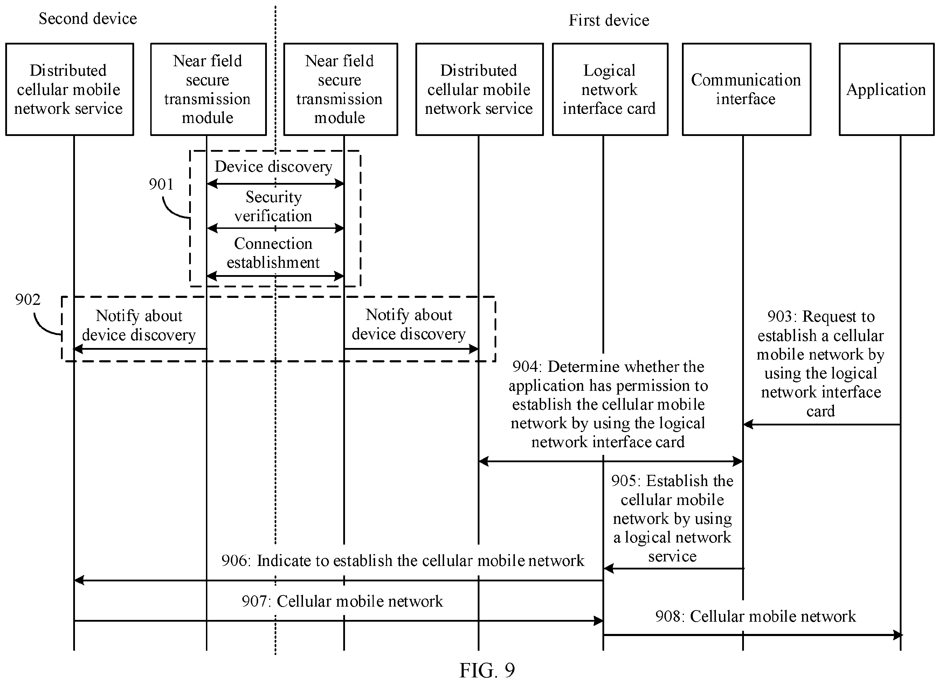

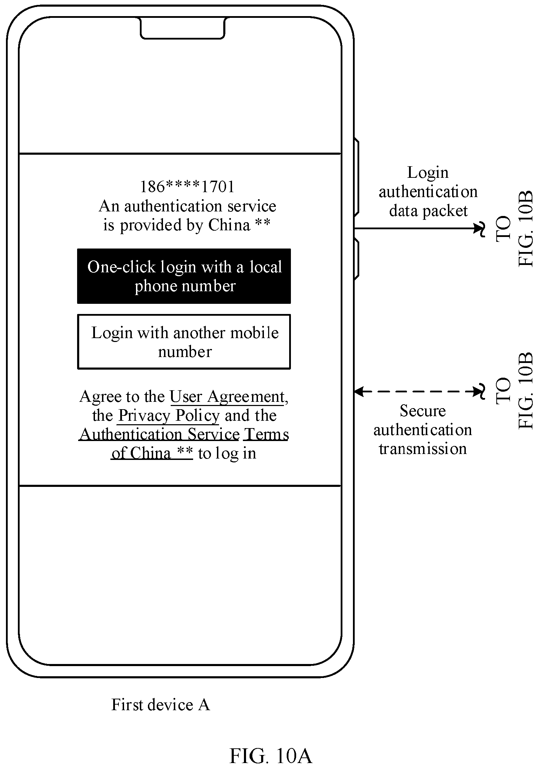

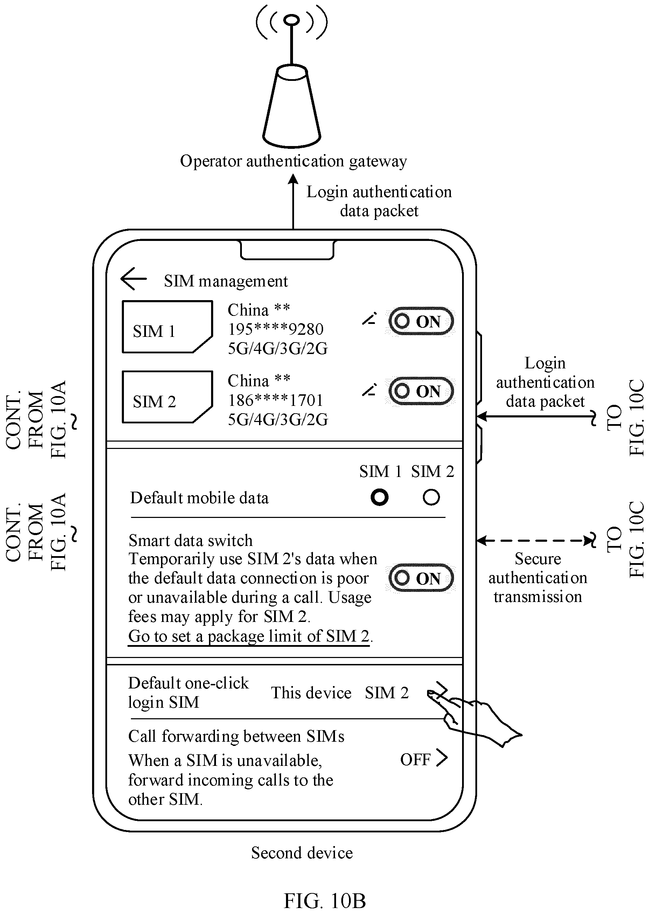

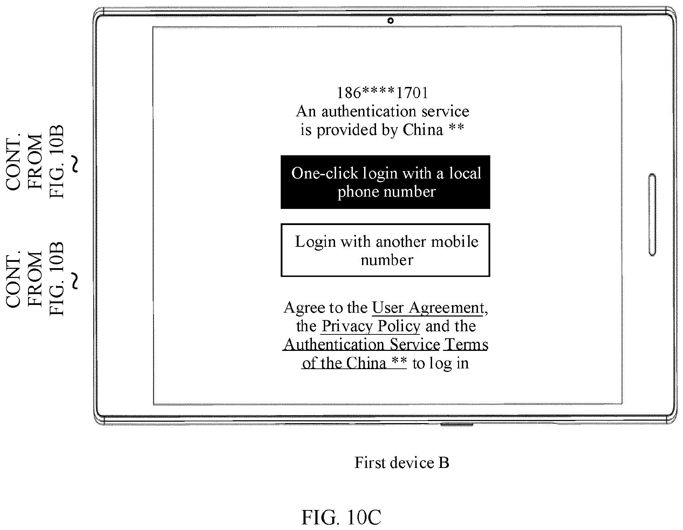

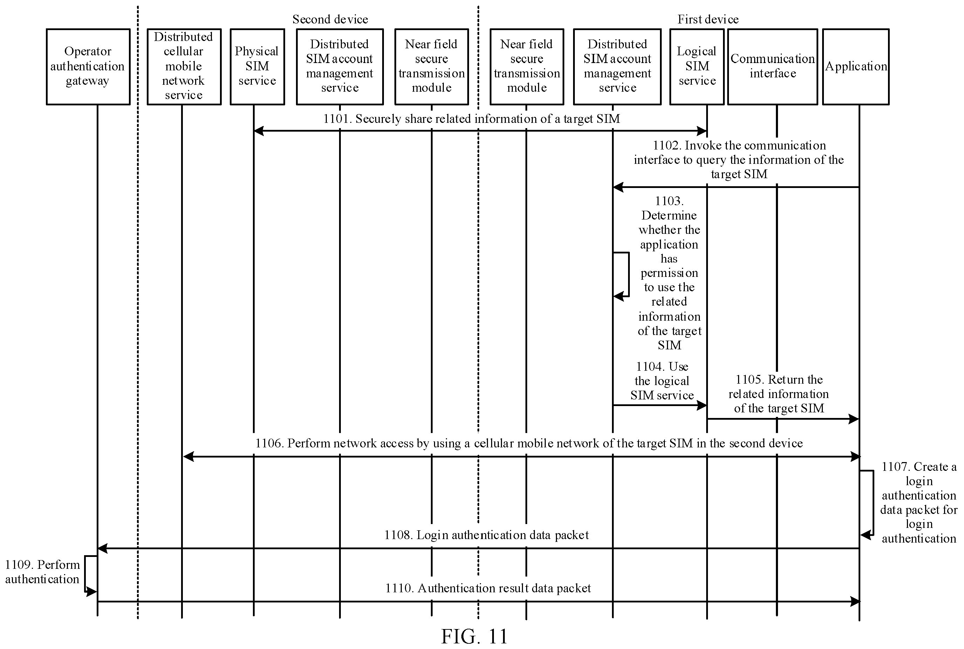

The key technology 1 may be used to implement step 710, and step 720 may be implemented based on the key technology 2. The following first describes the foregoing two key technologies in detail with reference to FIG. 8 and FIG. 9, and then describes the method provided in this embodiment of this application in more detail with reference to FIG. 10A, FIG. 10B, FIG. 10C, and FIG. 11.

FIG. 8 shows a specific implementation process of the key technology 1. The process shown in FIG. 8 may include step 801 to step 806. Only when the target SIM is inserted into the second device and the target SIM is activated, the second device can share the related information of the target SIM in the second device with the first device. It should be understood that the target SIM in the second device is a physical SIM. In FIG. 8, initialization of a physical SIM service and registration of the target SIM on the second device are to ensure that the target SIM in the second device is in an activated state.

In step 801, a near field secure transmission connection is established between a near field secure transmission module of the second device and a near field secure transmission module of the first device.

Establishment of near field secure transmission may include device discovery, security verification, and connection establishment. As described above, establishment of near field secure transmission is a prerequisite for implementing near field secure transmission, that is, is a prerequisite for securely sharing the related information of the target SIM. The near field secure transmission module provides a secure and reliable basis for communication between near field devices. Currently, there are many technologies capable of implementing the foregoing near field secure transmission function. For example, Bluetooth communication may implement device discovery within a range of 50 meters. In a Bluetooth communication protocol, first pairing between devices requires consent and authorization of the user. After first consent and authorization of the user, a Bluetooth protocol stack may automatically perform verification on both devices. After verification succeeds, a transmission channel is established, and information in the channel may be transmitted in an encrypted manner. For another example, a "distributed soft bus" technology may implement near field device discovery based on a same account, implement verification, and implement information transmission based on a plurality of transmission manners. In this embodiment of this application, a specific near field secure transmission manner is not limited, and this manner is required only to be secure and reliable.

It should be understood that first establishment of the near field secure transmission connection between the second device and the first device requires subjective participation of the user. The user may select two devices to establish a connection, or in other words, the user may select two devices to share related information of a SIM. If the near field secure transmission connection is not established between the second device and the first device for the first time, the user does not need to participate subjectively, and the near field secure transmission connection may be automatically established between the devices.

In step 802, the near field secure transmission module of the second device and the near field secure transmission module of the first device indicate respective distributed SIM account management services to discover sharing devices.

Specifically, the near field secure transmission module of the second device indicates the distributed SIM account management service of the second device to discover the sharing device, and the near field secure transmission module of the first device indicates the distributed SIM account management service of the first device to discover the sharing device.

It should be understood that "sharing" herein may mean that the first device obtains required data from the second device, or may mean that the second device obtains required data from the first device. Therefore, it may be understood that some data may be synchronized between the two devices by establishing the near field secure transmission connection.

In step 803, the distributed SIM account management service of the first device obtains related information of the physical SIM in the second device from the SIM account management service of the second device.

The physical SIM in the second device may include a primary SIM and/or a secondary SIM in the second device. The related information of the physical SIM in the second device is related information of the primary SIM and/or the secondary SIM in the second device. In an actual implementation process, if the user preselects a SIM for login authentication, the SIM preselected by the user is the target SIM. It should be understood that the related information of the target SIM is described in detail in step 710. For brevity, details are not described herein again.

In step 804, the distributed SIM account management service of the first device creates a logical SIM service based on the related information of the target SIM obtained from the distributed SIM account management service of the second device. The logical SIM service may be used to cache the related information of the target SIM as required.

Optionally, for some specific devices, for example, a smartwatch with small memory space, to save memory space of the device, no logical SIM service may be created, or the related information of the physical SIM in the second device may not be obtained in advance, and when the physical SIM service of the second device is required for login authentication of the application, the related information of the physical SIM in the second device is obtained through a communication interface and directly used without caching.

In step 805, a logical SIM service of the first device synchronizes the related information of the target SIM with the physical SIM service of the second device.

In step 806, the logical SIM service of the first device caches the related information of the target SIM in the second device.

In another implementation, for some specific devices, for example, a smartwatch with small memory space, to save memory space of the device, no logical SIM service may be created, or the related information of the target SIM in the second device may not be obtained in advance, and when the physical SIM service corresponding to the target SIM is required for login authentication of the application, the related information of the target SIM in the second device is obtained through a communication interface and directly used without caching. Therefore, step 803 to step 806 may not be performed, and when the related information of the target SIM needs to be used, the information is read from the physical SIM service of the second device.

FIG. 9 shows a specific implementation process of the key technology 2. As shown in FIG. 9, that near field devices perform network access by using cellular mobile network data of a specified SIM of each other may include step 901 to step 908. Step 720 in FIG. 7 may be implemented based on the key technology 2.

In step 901, a near field secure transmission connection is established between a near field transmission module of the second device and a near field secure transmission module of the first device.

In step 902, the near field secure transmission module of the second device and the near field secure transmission module of the first device indicate respective distributed SIM account management services to discover sharing devices.

It should be understood that step 901 and step 902 are the same as step 801 and step 802 in the foregoing key technology 1 described with reference to FIG. 8. For a specific implementation process, refer to the foregoing related descriptions of step 801 and step 802 with reference to FIG. 8. For brevity, details are not described herein again.

It should be further understood that step 901 and step 902 are prerequisites for performing subsequent step 903 to step 908, and therefore are shown in FIG. 9.

In step 903, an application on the first device invokes a communication interface, to request to establish a cellular mobile network by using a logical network interface card.

In step 904, the communication interface of the first device invokes a distributed cellular mobile network service to determine whether the application has permission to establish the cellular mobile network by using the logical network interface card.

In this embodiment of this application, establishing the cellular mobile network by using the logical network interface card is establishing the cellular mobile network by using the target SIM in the second device. Whether the application on the first device has the permission to establish the cellular mobile network by using the logical network interface card is whether the application on the first device can establish cellular mobile network data based on the established near field secure transmission connection to the second device, for example, the foregoing near field secure transmission, by using the target SIM in the second device.

The following lists several possible implementations of step 904.

In a first possible implementation, whether the application has the permission to establish the cellular mobile network by using the logical network interface card corresponding to the logical SIM is determined based on a trustlist method. Specifically, a trustlist may include an application that has the permission to establish a cellular mobile network by using the logical network interface card. In other words, an application in the trustlist can establish a cellular mobile network by using the logical network interface card, and an application that is not in the trustlist cannot use the cellular mobile network. The trustlist may be a list in which a group of applications that have permission to establish cellular mobile networks by using a logical network interface card corresponding to a logical SIM are correspondingly set for one device, or a list in which based on one logical SIM, a group of applications that have permission to establish cellular mobile networks by using the logical network interface card corresponding to the logical SIM are correspondingly set. A specific setting manner of the trustlist is not limited in this application. It should be further understood that the trustlist may be predefined. A specific form and content of the trustlist are not limited in this application. It should be noted that an application in the trustlist has the permission to establish a cellular mobile network by using a logical network interface card in any case.

In a second possible implementation, whether the application can establish the cellular mobile network by using the logical network interface card may be determined based on a foreground page. For example, when the foreground page of the first device is exactly a "login" page of the application, the application may be allowed to establish the cellular mobile network by using the logical network interface card; or when the foreground page of the first device is another page, the application is not allowed to establish the cellular mobile network by using the logical network interface card.

In a third possible implementation, establishment of the cellular mobile network by using the logical network interface card is not restricted. To be specific, any application may establish a cellular mobile network by using the logical network interface card regardless of which page is displayed.

In step 905, when the application has the permission to establish the cellular mobile network by using the logical network interface card, the communication interface of the first device establishes the cellular mobile network by using the logical network interface card.

In step 906, the logical network interface card of the first device indicates a distributed cellular mobile network service of the second device to establish the cellular mobile network.

In step 907, the second device returns the established cellular mobile network to the logical network interface card of the first device.

In step 908, the logical network interface card of the first device returns the cellular mobile network to the application on the first device.

Therefore, the first device may perform network access by using the cellular mobile network of the second device.

It should be understood that the foregoing process in which the first device establishes the cellular mobile network by using the logical network interface card and performs network access by using the cellular mobile network is a process in which the first device performs network access by using the cellular mobile network of the second device. Essentially, this is equivalent to a network proxy between the devices. In this embodiment of this application, the second device is a proxy device, and the first device is a proxied device. The second device sends a network data flow of the first device to the internet in a form of a proxy. From a perspective of the proxied device, the second device directly performs network interaction with the internet, and the proxy device only implements transparent transmission of a data packet. Therefore, this network access manner is also referred to as a network transparent proxy.

For ease of understanding, FIG. 10A, FIG. 10B, and FIG. 10C show a scenario in which the second device performs login authentication as the proxy of the first device. FIG. 10A, FIG. 10B, and FIG. 10C show one second device and two first devices. The two first devices are a first device A and a first device B. It may be learned from the figures that the second device may not only perform login authentication as a proxy of the first device A, but also perform login authentication as a proxy of the first device B. As shown in the figures, both the first device A and the first device B may send login authentication data packets to the second device, and then the second device may send the login authentication data packets from the first device A and the first device B to the operator authentication gateway by using a mobile cellular network of the SIM 2, to implement login authentication on the first device A and the first device B.

It should be understood that in an actual implementation, the second device may perform login authentication as a proxy of one or more first devices. A quantity of first devices is not limited in this embodiment of this application.

When the user starts the application on the first device and login authentication is performed, the application on the first device may invoke the communication interface to query related information of a SIM preselected by the user. The distributed SIM account management service may query whether there is related information of a logical SIM preselected by the user. If there is the related information of the logical SIM, the related information of the logical SIM is returned, that is, the application on the first device finds the related information of the SIM preselected by the user. It should be understood that the related information of the logical SIM is the related information of the target SIM described in step 710.

If there is the related information of the logical SIM in the first device, when the application invokes the communication interface to query the related information of the target SIM, the related information of the target SIM is returned, that is, the related information of the logical SIM is returned. Then, the user may perform a one-click login operation on the first device. As shown in FIG. 10A, FIG. 10B, and FIG. 10C, both the first device A and the first device B in the figures may establish a near field secure transmission connection to the second device, and share related information of a SIM. Applications on the two devices may perform login authentication by using the cellular mobile network of the second device.

If there is no related information of the logical SIM in the first device, it indicates that the first device has no logical SIM service, or does not obtain the related information of the target SIM, or the application does not have the permission to perform login authentication by using the logical SIM. In this case, the first device can only use a currently inserted physical SIM for login authentication. If no SIM is inserted into the first device, login authentication of the application cannot be completed.

It should be understood that the scenario in FIG. 10A, FIG. 10B, and FIG. 10C is merely an example, and should not constitute any limitation on this embodiment of this application. In an actual application scenario, there may be one or more first devices, and there may also be one or more second devices. The following describes, in detail with reference to FIG. 11, a specific process in which the user logs in to the application by using the first device, to better understand the method provided in this embodiment of this application.

As shown in FIG. 11, that the first device performs login authentication of the application by using a specified SIM in a near field condition may include step 1101 to step 1110.

In step 1101, the logical SIM service of the first device shares the related information of the target SIM with the physical SIM service of the second device.

Based on establishment of near field secure transmission between the second device and the first device, the logical SIM service of the first device may synchronize related information of the SIM with the physical network service of the second device, to implement sharing of the related information of the target SIM between the second device and the first device.

It should be understood that step 1101 corresponds to the key technology 1. For details, refer to the foregoing related descriptions made with reference to FIG. 8. Detailed implementation steps of step 1101 are not described herein again.

It should be further understood that if the logical SIM service of the first device obtains the related information of the target SIM, the obtained related information of the target SIM may be cached. The cached related information of the target SIM is the related information of the logical SIM in the first device.

In an implementation, before the first device performs step 1102, the user may preset the "default one-click login SIM" on a SIM management page of the first device, as shown in FIG. 6. To be specific, after the first device establishes the near field secure transmission connection to the second device, the user may select the "default one-click login SIM" for login authentication of the application.

In step 1102, when the user selects a login authentication manner of "one-click login with a local phone number", the application on the first device invokes, based on the target SIM mobile number preselected by the user, the communication interface to query the related information of the target SIM from the distributed SIM account management service of this device.

In step 1103, the distributed SIM account management service of the first device determines whether the application has permission to use the related information of the target SIM.

It should be understood that the permission to use the related information of the target SIM is permission to use the related information of the logical SIM in the first device.

It should be noted that a specific manner in which the distributed SIM account management service determines whether the application has the permission to use the related information of the target SIM, or in other words, the distributed SIM account management service determines whether the application has the permission to use the related information of the logical SIM may be similar to a specific manner of determining whether the application has the permission to establish the cellular mobile network by using the logical network interface card in the key technology 2, that is, determining based on a trustlist, determining based on the foreground page, or not restricting use of the related information. For brevity, a specific implementation of determining whether the application has the permission to use the related information of the SIM is not described in detail herein.

In step 1104, when the application on the first device has the permission to use the related information of the target SIM, the distributed SIM account management service of the first device uses the logical SIM service.

In step 1105, the logical SIM service of the first device returns the related information of the target SIM to the application.

In a possible case, when not caching the related information of the target SIM queried by the application, the logical SIM service of the first device needs to obtain the information of the target SIM from the second device, and returns an obtained result to the application on the first device. In another possible case, the logical SIM service of the first device has cached the related information of the target SIM, and does not need to obtain the related information of the target SIM from the second device. In this case, the logical SIM service may directly return the related information of the target SIM to the application on the first device.

In step 1106, the first device requests the second device to establish the cellular mobile network of the target SIM. After establishing the corresponding cellular mobile network, the second device returns the cellular mobile network to the first device. Therefore, the first device may perform network access by using the cellular mobile network of the second device, to complete subsequent login authentication of the application.

It should be understood that step 1106 corresponds to the key technology 2, and detailed implementation steps are not described again.

In step 1107, the application on the first device creates the login authentication data packet.

In step 1108, the second device sends the login authentication data packet to the operator authentication gateway as the proxy of the first device, to request to log in to the application.

In step 1109, the operator authentication gateway performs authentication based on the login authentication data packet.

In step 1110, the operator authentication gateway returns the authentication result data packet to the second device, and then the second device returns the authentication result data packet to the application on the first device.

That the second device sends the login authentication data packet to the operator authentication gateway as the proxy of the first device may mean that the second device performs login authentication as the proxy of the first device.

As described above, the login authentication data packet sent by the first device is forwarded by the second device to the operator authentication gateway, the authentication result data packet returned by the operator authentication gateway is forwarded by the second device to the first device, and both are transparently transmitted through the second device. Transparent transmission of the data packet between the first device and the operator authentication gateway through the second device may be implemented in the following several possible manners.

In a first possible implementation, based on a technical idea of network address translation (network address translation, NAT), that is, an internet and local area network address translation technology, a source IP address and a destination IP address of an IP packet are automatically modified, and address verification is automatically performed in a processing process. In this embodiment of this application, it may be considered that the second device and the first device form a small local area network, and the second device is used as a gateway of the first device. In this case, only NAT needs to be configured on the second device, to automatically forward the login authentication data packet of the first device to the operator authentication gateway. When the operator authentication gateway replies to the data packet, the second device automatically forwards a reply result to the first device through NAT. When the first device sends the login authentication data packet to the second device, a source address in the data packet is the first device, and a destination address is the second device. After receiving the login authentication data packet, the second device modifies the source address and the destination address. A modified source address is the second device, and a modified destination address is the operator authentication gateway. When the operator authentication gateway sends the authentication result data packet to the second device, a source address in the data packet is the operator authentication gateway, and a destination address in the data packet is the second device. After receiving the data packet, the second device modifies the source address and the destination address. A modified source address is the second device, and a modified destination address is the first device. So far, the second device completes login authentication as the proxy of the first device.

In a second possible implementation, based on a technical idea of route redirection, a data packet that is to be sent to a specified destination IP address/port is redirected to a new IP address/port. In this embodiment of this application, an IP routing table rule may be configured for the logical network service of the first device, to redirect a login authentication data packet of a specified application to a port specified by the logical network service. Then, the login authentication data packet of the application may be obtained by listening to the port. Then, the login authentication data packet is transmitted to a physical network interface card of the second device through near field secure transmission. When the application on the first device sends the login authentication data packet to the operator authentication gateway, a source address is the first device, a destination address is the operator authentication gateway, and the second device is equivalent to an intermediate node in an entire path. In this path, a next hop of the first device is the second device. After the login authentication data packet arrives at the second device, the second device creates a new data packet, and copies a packet of the login authentication data packet sent by the first device as a packet of the created data packet. In a header of the created data packet, a source address is the second device, and a destination address is still the operator authentication gateway. After performing authentication, the operator authentication gateway returns the authentication result data packet to the second device. After receiving the returned authentication result data packet, the second device creates a new data packet, and copies a packet of the authentication result data packet as a packet of the created data packet. In a header of the created data packet, a source address is the second device, and a destination address is the first device. So far, the second device completes login authentication as the proxy of the first device.

In a third possible implementation, based on a technical idea of a virtual private network (virtual private network, VPN), a default route of a device is modified to specify a specific application/all applications to pass through a specific network interface card of the device. A module initiating a VPN service may obtain a data packet or data packets of the specific application/all the applications of the device only by listening to the network service. In this embodiment of this application, the logical network service may create a VPN service to specify the application to obtain the login authentication data packet of the application by using the logical network service, and then transmit the login authentication data packet to the physical network service of the second device through near field secure transmission. It should be understood that the VPN technology is similar to that of route redirection, and a difference lies in that in a current device system, route redirection is a sensitive behavior, and route redirection cannot be used on devices of different manufacturers. Therefore, the VPN technology may be used. The VPN technology means that some system interfaces provided in the Android OS and the iOS allow modification of some routing tables of the systems under authorization of the user. The VPN technology is essentially the same as route redirection in terms of technical implementation details, and the only difference is the implementation method. For a specific implementation of the VPN, refer to the conventional technology, and details are not described herein again.

It should be understood that step 1101 to step 1105 in FIG. 11 correspond to step 710 of the method 700 in FIG. 7, and step 1106 to step 1110 in FIG. 11 may correspond to step 720 of the method 700 in FIG. 7. It may be understood that the foregoing describes a specific process of the login authentication method provided in this embodiment of this application with reference to a plurality of accompanying drawings. These accompanying drawings are merely examples. Each step in the figures is not necessarily required to be performed. For example, some steps may be skipped. In addition, an execution sequence of each step is not constant, and is not limited to that shown in the figures. The execution sequence of each step is determined based on a function and internal logic of the step.

For example, step 801 and step 802 in FIG. 8 and step 901 and step 902 in FIG. 9 may be performed only once.

For another example, step 1101 in FIG. 11 may be performed after step 1103. In this implementation, before step 1102, the user may preset the "default one-click login SIM" on a SIM management page of the first device, as shown in FIG. 5. To be specific, before the first device establishes the near field secure transmission connection to the second device, the user presets the "default one-click login SIM" for login authentication of the application. For another example, step 1101 may correspond to step 801 to step 805 in FIG. 8, so that step 801 may be performed first, and step 802 to step 805 may be performed simultaneously with step 1102 and step 1103. It should be understood that a specific execution sequence of the steps is not limited, provided that it is ensured that the related information of the target SIM is obtained before step 1104.

For another example, for some specific devices, for example, a smartwatch with small memory space, to save memory space of the device, no logical SIM service may be created, or the related information of the physical SIM in the second device may not be obtained and cached in advance, provided that a distributed SIM account management module determines that a logical SIM service exists at this time. The logical SIM service may exist in a manner of program code. When the application needs to perform login authentication by using the physical SIM service of the second device, the related information of the target SIM in the second device is obtained through the communication interface and directly used. Therefore, in this case, step 801 and step 802 in FIG. 8 may be performed first, then step 903 in FIG. 9 is performed, then step 803 in FIG. 8 is performed, then step 905 in FIG. 9 is performed, and then step 906 to step 908 in FIG. 9 are performed.

In the embodiment described with reference to Case 1, the first device may obtain, from the second device through the near field secure transmission connection, the related information of the target SIM for loin authentication of the application. The first device may send, the related information of the target SIM, the login authentication data packet of the application to the operator authentication gateway by using the cellular mobile network of the second device to perform authentication on the data packet, and transparently transmit the returned data packet to the application on the first device by using the target SIM of the second device after authentication succeeds. In this way, one-click login to the application may be implemented. Based on the foregoing solution, a problem that the user cannot perform login authentication of the application conveniently on a device without a SIM inserted can be resolved. In addition, the user may implement secure login on any device in the near field condition by using a SIM selected or specified by the user, without a limitation of a device into which a SIM is actually inserted. Therefore, a limitation of a technology of one-click login with a local number is broken. Even if the specified target SIM is not inserted into a device currently used by the user, one-click login can still be implemented through a simple operation. Therefore, user experience is improved.

### Case 2:

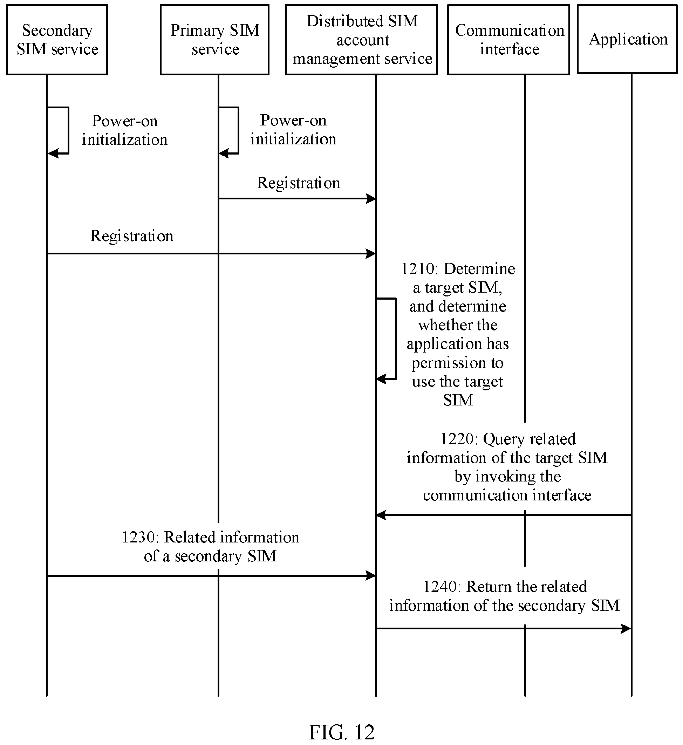

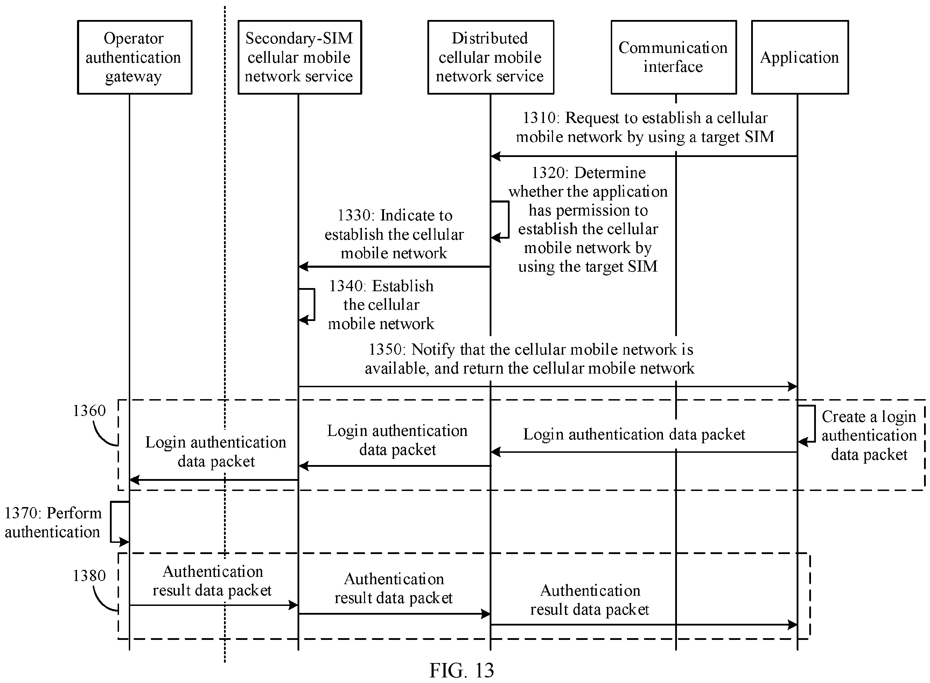

When the device of the user is a "dual SIM dual standby" device or a "multiple SIM multiple standby" device, and the user wants to use a non-default mobile data SIM for one-click login authentication, step 710 and step 720 shown in FIG. 7 may be performed. The following describes in detail specific implementations of step 710 and step 720 with reference to FIG. 12 and FIG. 13 respectively.

FIG. 12 shows a specific implementation process of step 710. As shown in FIG. 12, the process shown in FIG. 12 may include step 1210 to step 1240.

When SIMs in the "dual SIM dual standby" device or the "multiple SIM multiple standby" device of the user are all in an activated state, related information of the non-default mobile data SIM may be obtained, or in other words, related information of a secondary SIM may be obtained. In FIG. 12, power-on initialization and registration of a primary SIM service and a secondary SIM service are to ensure that the SIMs in the device of the user are in the activated state. It should be understood that the primary SIM service corresponds to a service of a primary SIM, the secondary SIM service corresponds to a service of the secondary SIM, and both the primary SIM service and the secondary SIM service may correspond to the physical SIM service in FIG. 2.

In step 1210, a distributed SIM account management service determines the target SIM, and determines whether the application has permission to use the target SIM.

After the user preselects the target SIM for login authentication, the distributed SIM account management service may determine the target SIM for login authentication, and determine whether the application has the permission to use the target SIM.

It should be understood that comparison with the solution of "one-click login with a local phone number" shown in FIG. 3 shows that the operations of determining the target SIM and determining whether the application has the permission to use the target SIM in step 1210 are not involved and not required to be performed in the solution shown in FIG. 3. Permission determining herein may be the same as the specific implementations of permission determining provided in step 904 in the embodiment described with reference to FIG. 9, and may be implemented by using any one of the three possible implementations provided above. This is not limited in this embodiment of this application. For brevity, details are not described herein again.

In step 1220, the application queries the distributed SIM account management service for the related information of the target SIM by invoking a communication interface.

In step 1230, when the application has the permission of the target SIM, for example, the SIM preselected by the user for login authentication is the secondary SIM, the distributed SIM account management service may obtain, from the secondary SIM service, the related information of the secondary SIM preselected by the user for login authentication.

In step 1240, the distributed SIM account management service returns the related information of the secondary SIM to the application.

It should be noted that an execution sequence of step 1210 and step 1220 may be reversed, and different execution sequences may correspond to different implementations.

FIG. 13 shows a specific implementation process of step 720. As shown in FIG. 13, the process shown in FIG. 13 may include step 1310 to step 1380.

In step 1310, the application requests, by invoking the communication interface, a distributed cellular mobile network service to establish a cellular mobile network.

In step 1320, the distributed cellular mobile network service determines whether the application has permission to use a cellular mobile network of the secondary SIM.

It should be understood that a specific implementation of determining the permission of the application herein is the same as that of determining the permission of the application in the foregoing embodiment described with reference to the figure, that is, may be any one of the foregoing three permission determining manners. This is not limited in this embodiment of this application. For brevity, details are not described herein again.

In step 1330, when the application has the permission to use the cellular mobile network of the secondary SIM, the distributed cellular mobile network service indicates a secondary cellular mobile network service to establish the cellular mobile network.

In step 1340, the secondary-SIM cellular mobile network service establishes the cellular mobile network.

In step 1350, after establishing the cellular mobile network, the secondary-SIM cellular mobile network service notifies the application that the cellular mobile network of the secondary SIM is available, and returns the cellular mobile network of the secondary SIM to the application.

In step 1360, the application creates the login authentication data packet for login authentication, and sends the login authentication data packet to the distributed cellular mobile network service. The distributed cellular mobile network service sends the login authentication data packet to the secondary-SIM cellular mobile network service. The secondary-SIM cellular mobile network service sends the login authentication data packet to the operator gateway for authentication. To be specific, the application sends the login authentication data packet by using the cellular mobile network of the secondary SIM.

In step 1370, the operator authentication gateway performs authentication based on the login authentication data packet.

In step 1380, the operator authentication gateway returns the authentication result data packet to the secondary-SIM cellular mobile network service. The secondary-SIM cellular mobile network service returns the authentication result data packet to the distributed cellular mobile network service. The distributed cellular mobile network service returns the authentication result data packet to the application.

It should be understood that when the device of the user is a "dual SIM dual standby" device or a "multiple SIM multiple standby" device, and the user wants to use the non-default mobile data SIM (that is, the secondary SIM) for one-click login authentication, the process shown in FIG. 12 may be first performed to obtain the related information of the target SIM. Then, the process shown in FIG. 13 is performed, that is, login authentication of the application is performed by using the target SIM. If the SIM preselected by the user for login authentication is the non-default mobile data SIM (that is, the secondary SIM), one-click login authentication with the non-default mobile data SIM on the device may be implemented in this step.

It should be further understood that the foregoing describes a specific process of the login authentication method provided in this embodiment of this application with reference to a plurality of accompanying drawings. These accompanying drawings are merely examples. Each step in the figures is not necessarily required to be performed. For example, some steps may be skipped. In addition, an execution sequence of each step is not constant, and is not limited to that shown in the figure. The execution sequence of each step is determined based on a function and internal logic of the step. For example, in step 1360, the application may alternatively directly send the login authentication data packet to the secondary-SIM cellular mobile network service, and then the secondary-SIM cellular mobile network service sends the login authentication data packet to the operator authentication gateway. In step 1380, after receiving the authentication result data packet sent by the operator, the secondary-SIM cellular mobile network service may directly return the authentication result data packet to the application.

In the embodiment described with reference to Case 2, the "dual SIM dual standby" device or the "multiple SIM multiple standby" device of the user may use the information of the non-default mobile data SIM to implement authentication for one-click login to the application with on a local phone number. Therefore, a problem that login authentication of the application cannot be performed conveniently by using the non-default SIM can be resolved. When application adaptation is not required, the application may obtain information of any SIM in the multi-SIM device including the default mobile data SIM after selection and authorization of the user, and use a cellular mobile network established by using any SIM. In this way, a limitation of a technology of one-click login with a local phone number can be broken to some extent. Therefore, user experience is improved.

It should be understood that the steps of the foregoing method can be completed by using a hardware integrated logic circuit in a processor, or by using instructions in a form of software. The steps of the method disclosed with reference to embodiments of this application may be directly performed by the hardware processor, or may be performed by a combination of hardware in the processor and a software module. The software module may be located in a mature storage medium in the art, for example, a random access memory, a flash memory, a read-only memory, a programmable read-only memory or electrically erasable programmable memory, or a register. The storage medium is located in a memory. The processor reads information in the memory, and completes the steps of the foregoing method in combination with the hardware of the processor. Details are not described herein again, to avoid repetition.

This application further provides an electronic device. The electronic device may include a memory and a processor. The memory may be configured to store a computer program. The processor may be configured to invoke the computer program in the memory, so that the electronic device performs the method in any one of the embodiments shown in FIG. 7 to FIG. 13.

This application further provides a computer program product. The computer program product includes a computer program (which may also be referred to as code or an instruction). When the computer program is run, an electronic device is enabled to perform the method in any one of the embodiments shown in FIG. 7 to FIG. 13.

This application further provides a computer-readable storage medium. The computer-readable storage medium stores a computer program (which may also be referred to as code or an instruction). When the computer program is run, an electronic device is enabled to perform the method in any one of the embodiments shown in FIG. 7 to FIG. 13.

It should be understood that the processor in embodiments of this application may be an integrated circuit chip with a signal processing capability. In an implementation process, steps in the foregoing method embodiments can be implemented by using a hardware integrated logic circuit in the processor, or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The methods, steps, and logical block diagrams in embodiments of this application may be implemented or performed. The general-purpose processor may be a microprocessor. Alternatively, the processor may be any conventional processor or the like. The steps of the method disclosed with reference to embodiments of this application may be directly performed and completed by a hardware decoding processor, or may be performed and completed by a combination of hardware in a decoding processor and a software module. The software module may be located in a mature storage medium in the art, for example, a random access memory, a flash memory, a read-only memory, a programmable read-only memory or electrically erasable programmable memory, or a register. The storage medium is located in the memory. The processor reads information in the memory, and completes the steps of the foregoing method in combination with the hardware of the processor.

It should be further understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example but not restrictive description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and method described in this specification includes but is not limited to these and any other proper types of memories.

Terms "unit", "module", and the like used in this specification are intended to indicate a computer-related entity, hardware, firmware, a combination of hardware and software, software, or software in execution.

A person of ordinary skill in the art may be aware that each illustrative logical block (illustrative logical block) and step (step) described with reference to embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. In the several embodiments provided in this application, it should be understood that the disclosed apparatus, device, and method may be implemented in other manners. For example, the described apparatus embodiment is merely an example. For example, division into the units is merely logical function division, and may be other division during actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist independently physically, or two or more units may be integrated into one unit.

In the foregoing embodiments, all or some of the functions of the functional units may be implemented by software, hardware, firmware, or any combination thereof. When software is used to implement the functions, all or a part of the functions may be implemented in a form of a computer program product. The computer program product includes one or more computer instructions (programs). When the computer program instructions (programs) are loaded and executed on a computer, the processes or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state drive, SSD)), or the like.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium capable of storing program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A login authentication method, comprising:
obtaining (710), by a first device, through a near field secure transmission connection, related information of a target subscriber identity module, SIM, wherein the target SIM is a physical SIM configured in a second device; and
performing (720, 1109, 1370), by the first device, login authentication of an application based on the related information of the target SIM.

2. The method (700) according to claim 1, wherein the performing (720, 1109, 1370), by the first device, login authentication of an application based on the related information of the target SIM comprises:
generating (1107, 1360), by the first device, a login authentication data packet (1108) based on the related information of the target SIM, wherein the login authentication data packet (1108) is used for login authentication of the application; and
sending, by the first device, the login authentication data packet (1108) to an operator authentication gateway by using a cellular mobile network of the target SIM.

3. The method (700) according to claim 1 or 2, wherein before the performing (720, 1109, 1370), by the first device, login authentication of an application based on the related information of the target SIM, the method (700) further comprises:
determining, by the first device in response to an operation of a user, the target SIM for login authentication.

4. The method (700) according to any one of claims 1 to 3, wherein the related information of the target SIM comprises at least one of the following:
an integrated circuit card identity, ICCID, a SIM mobile number, and user identity information of the target SIM.

5. The method (700) according to any one of claims 1 to 4, wherein the method (700) further comprises:
receiving, by the first device, an authentication result data packet (1110, 1380) from the second device, wherein the authentication result data packet (1110, 1380) is received by the second device from the operator authentication gateway by using the cellular mobile network of the target SIM.

6. The method (700) according to any one of claims 1 to 5, wherein before the obtaining (710), by a first device, through a near field secure transmission connection, related information of a target SIM, the method (700) further comprises:
establishing, by the first device, a near field secure transmission connection to the second device, wherein secure communication can be performed between the devices that establish the near field secure transmission connection; and
the obtaining (710), by a first device, through a near field secure transmission connection, related information of a target subscriber identity module SIM comprises:
sharing (1101), by the first device, SIM information with the second device based on the near field secure transmission connection, to obtain the related information of the SIM.

7. An electronic device (100), comprising at least one processor (110) and at least one communication interface, wherein the at least one processor (110) is configured to execute a computer program, so that the electronic device (100) performs the following operations:
obtaining (710) related information of a target subscriber identity module, SIM, through a near field secure transmission connection, wherein the target SIM is a physical SIM configured in a second device; and
performing (720, 1109, 1370) login authentication of an application based on the related information of the target SIM.

8. The electronic device (100) according to claim 7, wherein the at least one processor (110) is further configured to execute the computer program, so that the electronic device (100) performs the following operations:
generating (1107, 1360) a login authentication data packet (1108) based on the related information of the target SIM, wherein the login authentication data packet (1108) is used for login authentication of the application; and
sending the login authentication data packet (1108) to an operator authentication gateway by using a cellular mobile network of the target SIM.

9. The electronic device (100) according to claim 7 or 8, wherein the at least one processor (110) is configured to execute the computer program, so that the electronic device (100) performs the following operation:
determining, in response to an operation of a user, the target SIM for login authentication.

10. The electronic device (100) according to any one of claims 7 to 9, wherein the related information of the target SIM comprises at least one of the following:
an integrated circuit card identity, ICCID, a SIM mobile number, and user identity information of the target SIM.

11. The electronic device (100) according to any one of claims 7 to 10, wherein the at least one processor (110) is further configured to execute the computer program, so that the electronic device (100) performs the following operation:
receiving an authentication result data packet (1110, 1380) from the second device, wherein the authentication result data packet (1110, 1380) is received by the second device from the operator authentication gateway by using the cellular mobile network of the target SIM.

12. The electronic device (100) according to any one of claims 7 to 11, wherein the at least one processor (110) is further configured to execute the computer program, so that the electronic device (100) performs the following operations:
establishing a near field secure transmission connection to the second device, wherein secure communication can be performed between the devices that establish the near field secure transmission connection; and
sharing (1101) SIM information with the second device based on the near field secure transmission connection, to obtain the related information of the SIM.

13. A program product, wherein the program product comprises a computer program, the computer program is stored in a readable storage medium, at least one processor (110) of a communication apparatus may read the computer program from the readable storage medium, and the at least one processor (110) executes the computer program, so that the communication apparatus implements the method (700) according to any one of claims 1 to 6.

## Patentansprüche

1. Anmeldungsauthentifizierungsverfahren, umfassend:
Erlangen (710), durch eine erste Vorrichtung, über eine sichere Nahfeld-Übertragungsverbindung, zugehöriger Informationen eines Ziel-Teilnehmer-Identitätsmoduls, Ziel-SIM, wobei es sich bei dem Ziel-SIM um ein physisches SIM handelt, das in einer zweiten Vorrichtung konfiguriert ist; und
Durchführen (720, 1109, 1370), durch die erste Vorrichtung, einer Anmeldungsauthentifizierung einer Anwendung basierend auf den zugehörigen Informationen des Ziel-SIM.

2. Verfahren (700) nach Anspruch 1, wobei das Durchführen (720, 1109, 1370), durch die erste Vorrichtung, der Anmeldungsauthentifizierung einer Anwendung basierend auf den zugehörigen Informationen des Ziel-SIM Folgendes umfasst:
Erzeugen (1107, 1360), durch die erste Vorrichtung, eines Anmeldungsauthentifizierungs-Datenpakets (1108) basierend auf den zugehörigen Informationen des Ziel-SIM, wobei das Anmeldungsauthentifizierungs-Datenpaket (1108) zur Anmeldungsauthentifizierung der Anwendung verwendet wird; und
Senden, durch die erste Vorrichtung, des Anmeldungsauthentifizierungs-Datenpakets (1108) an ein Betreiber-Authentifizierungsgateway unter Verwendung eines Mobilfunknetzes des Ziel-SIM.

3. Verfahren (700) nach Anspruch 1 oder 2, wobei das Verfahren (700) vor dem Durchführen (720, 1109, 1370), durch die erste Vorrichtung, der Anmeldungsauthentifizierung einer Anwendung basierend auf den zugehörigen Informationen des Ziel-SIM ferner Folgendes umfasst:
Bestimmen, durch die erste Vorrichtung als Reaktion auf eine Operation eines Benutzers, des Ziel-SIM für die Anmeldungsauthentifizierung.

4. Verfahren (700) nach einem der Ansprüche 1 bis 3, wobei die zugehörigen Informationen des Ziel-SIM mindestens eines des Folgenden umfassen:
eine Integrated-Circuit-Card-Identity, ICCID, eine SIM-Mobilfunknummer und Benutzeridentitätsinformationen des Ziel-SIM.

5. Verfahren (700) nach einem der Ansprüche 1 bis 4, wobei das Verfahren (700) ferner Folgendes umfasst:
Empfangen, durch die erste Vorrichtung, eines Authentifizierungsergebnis-Datenpakets (1110, 1380) von der zweiten Vorrichtung, wobei das Authentifizierungsergebnis-Datenpaket (1110, 1380) durch die zweite Vorrichtung von dem Betreiber-Authentifizierungsgateway unter Verwendung des Mobilfunknetzes des Ziel-SIM empfangen wird.

6. Verfahren (700) nach einem der Ansprüche 1 bis 5, wobei das Verfahren (700) vor dem Erlangen (710), durch eine erste Vorrichtung, über eine sichere Nahfeld-Übertragungsverbindung, zugehöriger Informationen einer Ziel-SIM ferner Folgendes umfasst:
Einrichten, durch die erste Vorrichtung, einer sicheren Nahfeld-Übertragungsverbindung zu der zweiten Vorrichtung, wobei eine sichere Kommunikation zwischen den Vorrichtungen, die die sichere Nahfeld-Übertragungsverbindung einrichten, durchgeführt werden kann; und
das Erlangen (710), durch eine erste Vorrichtung, über eine sichere Nahfeld-Übertragungsverbindung, zugehöriger Informationen eines Ziel-Teilnehmer-Identitätsmoduls, Ziel-SIM, Folgendes umfasst:
Teilen (1101), durch die erste Vorrichtung, von SIM-Informationen mit der zweiten Vorrichtung basierend auf der sicheren Nahfeld-Übertragungsverbindung, um die zugehörigen Informationen des SIM zu erlangen.

7. Elektronische Vorrichtung (100), umfassend mindestens einen Prozessor (110) und mindestens eine Kommunikationsschnittstelle, wobei der mindestens eine Prozessor (110) dazu konfiguriert ist, ein Computerprogramm auszuführen, sodass die elektronische Vorrichtung (100) die folgenden Operationen durchführt:
Erlangen (710) zugehöriger Informationen eines Ziel-Teilnehmer-Identitätsmoduls, Ziel-SIM, über eine sichere Nahfeld-Übertragungsverbindung, wobei es sich bei dem Ziel-SIM um ein physisches SIM handelt, das in einer zweiten Vorrichtung konfiguriert ist; und
Durchführen (720, 1109, 1370) einer Anmeldungsauthentifizierung einer Anwendung basierend auf den zugehörigen Informationen des Ziel-SIM.

8. Elektronische Vorrichtung (100) nach Anspruch 7, wobei der mindestens eine Prozessor (110) ferner dazu konfiguriert ist, das Computerprogramm auszuführen, sodass die elektronische Vorrichtung (100) die folgenden Operationen durchführt:
Erzeugen (1107, 1360) eines Anmeldungsauthentifizierungs-Datenpakets (1108) basierend auf den zugehörigen Informationen des Ziel-SIM, wobei das Anmeldungsauthentifizierungs-Datenpaket (1108) zur Anmeldungsauthentifizierung der Anwendung verwendet wird; und
Senden des Anmeldungsauthentifizierungs-Datenpakets (1108) an ein Betreiber-Authentifizierungsgateway unter Verwendung eines Mobilfunknetzes des Ziel-SIM.

9. Elektronische Vorrichtung (100) nach Anspruch 7 oder 8, wobei der mindestens eine Prozessor (110) dazu konfiguriert ist, das Computerprogramm auszuführen, sodass die elektronische Vorrichtung (100) die folgende Operation durchführt:
Bestimmen, als Reaktion auf eine Operation eines Benutzers, des Ziel-SIM für die Anmeldungsauthentifizierung.

10. Elektronische Vorrichtung (100) nach einem der Ansprüche 7 bis 9, wobei die zugehörigen Informationen des Ziel-SIM mindestens eines des Folgenden umfassen:
eine Integrated-Circuit-Card-Identity, ICCID, eine SIM-Mobilfunknummer und Benutzeridentitätsinformationen des Ziel-SIM.

11. Elektronische Vorrichtung (100) nach einem der Ansprüche 7 bis 10, wobei der mindestens eine Prozessor (110) ferner dazu konfiguriert ist, das Computerprogramm auszuführen, sodass die elektronische Vorrichtung (100) die folgende Operation durchführt:
Empfangen eines Authentifizierungsergebnis-Datenpakets (1110, 1380) von der zweiten Vorrichtung, wobei das Authentifizierungsergebnis-Datenpaket (1110, 1380) durch die zweite Vorrichtung von dem Betreiber-Authentifizierungsgateway unter Verwendung des Mobilfunknetzes des Ziel-SIM empfangen wird.

12. Elektronische Vorrichtung (100) nach einem der Ansprüche 7 bis 11, wobei der mindestens eine Prozessor (110) ferner dazu konfiguriert ist, das Computerprogramm auszuführen, sodass die elektronische Vorrichtung (100) die folgenden Operationen durchführt:
Einrichten einer sicheren Nahfeld-Übertragungsverbindung zu der zweiten Vorrichtung, wobei eine sichere Kommunikation zwischen den Vorrichtungen, die die sichere Nahfeld-Übertragungsverbindung einrichten, durchgeführt werden kann; und
Teilen (1101) von SIM-Informationen mit der zweiten Vorrichtung basierend auf der sicheren Nahfeld-Übertragungsverbindung, um die zugehörigen Informationen des SIM zu erlangen.

13. Programmprodukt, wobei das Programmprodukt ein Computerprogramm umfasst, das Computerprogramm in einem lesbaren Speichermedium gespeichert ist, mindestens ein Prozessor (110) einer Kommunikationseinrichtung das Computerprogramm von dem lesbaren Speichermedium lesen kann und der mindestens eine Prozessor (110) das Computerprogramm ausführt, sodass die Kommunikationseinrichtung das Verfahren (700) nach einem der Ansprüche 1 bis 6 implementiert.

## Revendications

1. Procédé d'authentification de connexion, comprenant :
l'obtention (710), par un premier dispositif, à travers une connexion de transmission sécurisée en champ proche, d'informations relatives à un module d'identité d'abonné, SIM, cible, dans lequel le SIM cible est un SIM physique configuré dans un second dispositif ; et
la réalisation (720, 1109, 1370), par le premier dispositif, d'une authentification de connexion d'une application sur la base des informations relatives au SIM cible.

2. Procédé (700) selon la revendication 1, dans lequel la réalisation (720, 1109, 1370), par le premier dispositif, d'une authentification de connexion d'une application sur la base des informations relatives au SIM cible comprend :
la génération (1107, 1360), par le premier dispositif, d'un paquet de données d'authentification de connexion (1108) sur la base des informations relatives au SIM cible, dans lequel le paquet de données d'authentification de connexion (1108) est utilisé pour l'authentification de connexion de l'application ; et
l'envoi, par le premier dispositif, du paquet de données d'authentification de connexion (1108) à une passerelle d'authentification d'opérateur à l'aide d'un réseau mobile cellulaire du SIM cible.

3. Procédé (700) selon la revendication 1 ou 2, dans lequel avant la réalisation (720, 1109, 1370), par le premier dispositif, d'une authentification de connexion d'une application sur la base des informations relatives au SIM cible, le procédé (700) comprend en outre :
la détermination, par le premier dispositif en réponse à une opération d'un utilisateur, du SIM cible pour l'authentification de connexion.

4. Procédé (700) selon l'une quelconque des revendications 1 à 3, dans lequel les informations relatives au SIM cible comprennent au moins l'une des suivantes :
un identifiant de carte à circuit intégré, ICCID, un numéro de mobile SIM et des informations d'identité de l'utilisateur du SIM cible.

5. Procédé (700) selon l'une quelconque des revendications 1 à 4, dans lequel le procédé (700) comprend en outre :
la réception, par le premier dispositif, d'un paquet de données de résultat d'authentification (1110, 1380) à partir du second dispositif, dans lequel le paquet de données de résultat d'authentification (1110, 1380) est reçu par le second dispositif à partir de la passerelle d'authentification d'opérateur à l'aide du réseau mobile cellulaire du SIM cible.

6. Procédé (700) selon l'une quelconque des revendications 1 à 5, dans lequel, avant l'obtention (710), par un premier dispositif, à travers une connexion de transmission sécurisée en champ proche, d'informations relatives à un SIM cible, le procédé (700) comprend en outre :
l'établissement, par le premier dispositif, d'une connexion de transmission sécurisée en champ proche avec le second dispositif, dans lequel une communication sécurisée peut être réalisée entre les dispositifs qui établissent la connexion de transmission sécurisée en champ proche ; et
l'obtention (710), par un premier dispositif, à travers une connexion de transmission sécurisée en champ proche, d'informations relatives à un module d'identité d'abonné, SIM, cible comprend :
le partage (1101), par le premier dispositif, d'informations SIM avec le second dispositif sur la base de la connexion de transmission sécurisée en champ proche, pour obtenir les informations relatives au SIM.

7. Dispositif électronique (100), comprenant au moins un processeur (110) et au moins une interface de communication, dans lequel l'au moins un processeur (110) est configuré pour exécuter un programme informatique, de sorte que le dispositif électronique (100) réalise les opérations suivantes :
l'obtention (710) d'informations relatives à un module d'identité d'abonné, SIM, cible à travers une connexion de transmission sécurisée en champ proche, dans lequel le SIM cible est un SIM physique configuré dans un second dispositif ; et
la réalisation (720, 1109, 1370) d'une authentification de connexion d'une application sur la base des informations relatives au SIM cible.

8. Dispositif électronique (100) selon la revendication 7, dans lequel l'au moins un processeur (110) est en outre configuré pour exécuter le programme informatique, de sorte que le dispositif électronique (100) réalise les opérations suivantes :
la génération (1107, 1360) d'un paquet de données d'authentification de connexion (1108) sur la base des informations relatives au SIM cible, dans lequel le paquet de données d'authentification de connexion (1108) est utilisé pour l'authentification de connexion de l'application ; et
l'envoi du paquet de données d'authentification de connexion (1108) à une passerelle d'authentification d'opérateur à l'aide d'un réseau mobile cellulaire du SIM cible.

9. Dispositif électronique (100) selon la revendication 7 ou 8, dans lequel l'au moins un processeur (110) est configuré pour exécuter le programme informatique, de sorte que le dispositif électronique (100) réalise l'opération suivante :
la détermination, en réponse à une opération d'un utilisateur, du SIM cible pour l'authentification de connexion.

10. Dispositif électronique (100) selon l'une quelconque des revendications 7 à 9, dans lequel les informations relatives au SIM cible comprennent au moins l'une des suivantes :
un identifiant de carte à circuit intégré, ICCID, un numéro de mobile SIM et des informations d'identité de l'utilisateur du SIM cible.

11. Dispositif électronique (100) selon l'une quelconque des revendications 7 à 10, dans lequel l'au moins un processeur (110) est en outre configuré pour exécuter le programme informatique, de sorte que le dispositif électronique (100) réalise l'opération suivante :
la réception d'un paquet de données de résultat d'authentification (1110, 1380) à partir du second dispositif, dans lequel le paquet de données de résultat d'authentification (1110, 1380) est reçu par le second dispositif à partir de la passerelle d'authentification d'opérateur à l'aide du réseau mobile cellulaire du SIM cible.

12. Dispositif électronique (100) selon l'une quelconque des revendications 7 à 11, dans lequel l'au moins un processeur (110) est en outre configuré pour exécuter le programme informatique, de sorte que le dispositif électronique (100) réalise les opérations suivantes :
l'établissement d'une connexion de transmission sécurisée en champ proche avec le second dispositif, dans lequel une communication sécurisée peut être réalisée entre les dispositifs qui établissent la connexion de transmission sécurisée en champ proche ; et
le partage (1101) d'informations SIM avec le second dispositif sur la base de la connexion de transmission sécurisée en champ proche, pour obtenir les informations relatives au SIM.

13. Produit de programme, dans lequel le produit de programme comprend un programme informatique, le programme informatique est stocké dans un support de stockage lisible, au moins un processeur (110) d'un appareil de communication peut lire le programme informatique à partir du support de stockage lisible, et l'au moins un processeur (110) exécute le programme informatique, de sorte que l'appareil de communication met en œuvre le procédé (700) selon l'une quelconque des revendications 1 à 6.
